# EUROPÄISCHE PATENTSCHRIFT

(11) **EP 0 758 068 B1**
(45) Veröffentlichungstag und Bekanntmachung des Hinweises auf die Patenterteilung: **02.10.2002**
(21) Anmeldenummer: 96111136.6
(22) Anmeldetag: 11.07.1996
(51) Int. Cl.: F16L 37/084, F16L 37/088

(54) **Steckverbindung für Druckmittelleitungen**
Plug connector for high-pressure fluid lines
Joint à emboîtement pour tuyauterie de fluide à haute pression

(30) Priorität: 08.08.1995 DE 19529080
(43) Veröffentlichungstag der Anmeldung: 12.02.1997
(73) Patentinhaber: Voss Automotive GmbH, 51688 Wipperfürth (DE)
(72) Erfinder: Hester, Hilmar, 51688 Wipperfürth (DE); Goller, Bernd, 51688 Wipperfürth (DE)
(74) Vertreter: Zapf, Christoph, Dipl.-Ing.

(56) Entgegenhaltungen:
- EP-A- 0 132 673
- EP-A- 0 647 803
- DE-A- 2 856 064
- DE-U- 8 807 453
- DE-U- 29 501 006
- GB-A- 1 527 018
- GB-A- 2 240 148
- US-A- 2 468 848

## Beschreibung

Die vorliegende Erfindung betrifft eine Steckverbindung für Druckmittelleitungen, mit einem Gehäuse und einem Stecker, wobei der Stecker mit einem Steckerschaft in eine Steckposition in eine Aufnahmeöffnung des Gehäuses einführbar, in der Steckposition mit einem Halteelement verbindbar und zusammen mit dem Halteelement entgegen der Einführungsrichtung in eine Arretierposition führbar ist, in welcher der Stecker mittels des Halteelementes gegen eine Verschiebung entgegen seiner Einführungsrichtung fixierbar ist.

Derartige Steckverbindungen sind bekannt. Beispielsweise sei auf das deutsche Gebrauchsmuster DE-U-295 01 006 verwiesen. Bei solchen Steckverbindungen ist es für die Funktion, vor allem beim Einsteckvorgang, erforderlich, daß der Stecker auch im arretierten Zustand noch geringfügig in axialer Richtung relativ zum Gehäuse beweglich ist. Dieses mögliche Spiel in axialer Richtung ist jedoch im Betriebszustand, d.h. unter Betriebsdruck, unerwünscht, da es bei eventuellen Druckschwankungen die Funktion des Halteelementes beeinträchtigen könnte. Zudem kann durch die möglichen Relativbewegungen und die daraus resultierende Reibung auch die Haltbarkeit von Dichtungen negativ beeinflußt werden.

Um diesen Bewegungen im Betriebszustand entgegenzuwirken, ist es beispielsweise aus der Veröffentlichung EP-B-0 005 865 bekannt, ein mechanisches Druckfederelement (z.B. Tellerfeder oder Gummipuffer) so zwischen dem Stecker und dem Gehäuse anzuordnen, daß der Stecker entgegen seiner Einführungsrichtung mit einer elastischen Vorspannung beaufschlagt wird. Diese Lösung, die sich im wesentlichen gut bewährt hat, beeinflußt aber auch die Steck- bzw. Montagekraft, da beim Steckvorgang zusätzlich die Vorspannkraft überwunden werden muß.

Aus der europäischen Patentanmeldung EP-A-0 132 673 ist eine Steckverbindung für Druckmittelleitungen bekannt, bei der ebenfalls ein Halteelement (Haltering) vorhanden ist. Dieser Haltering ist an einer Überwurfschraube in einer Nut befestigt und somit innerhalb der Aufnahmeöffnung in einer definierten Position ortsfest fixiert. Wird der Stecker eingesteckt, so erfolgt in einer bestimmten Einsteckstellung ein Einrasten des Halterings in den Stecker und die Arretierposition ist sofort erreicht. Demgemäß handelt es sich bei dieser bekannten Kupplung nicht um eine gattungsgemäße Steckverbindung, bei der der Stecker, mit einem Steckerschaft in eine Steckposition in eine Aufnahmeöffnung des Gehäuses einführbar ist, in der er mit einem Halteelement verbindbar und zusammen mit dem Halteelement entgegen der Einführungsrichtung in eine Arretierposition führbar ist.

Der vorliegenden Erfindung liegt die Aufgabe zugrunde, eine Steckverbindung der gattungsgemäßen Art zu schaffen, die sich durch weiter verbesserte Funktionalität, insbesondere durch hohe Betriebssicherheit, lange Haltbarkeit sowie gute Handhabbarkeit und einfache Montage, insbesondere durch geringe Steckkräfte, auszeichnet.

Erfindungsgemäß wird dies dadurch erreicht, daß der Stecker in seiner Arretierposition mittels eines mit dem Gehäuse in axialer Richtung des Steckers zusammenwirkenden Sperrmittels gegen eine Verschiebung in Einführungsrichtung des Steckers sicherbar ist, wobei das Sperrmittel einen derartigen Aufbau und eine derartige Anordnung besitzt, daß das Sperrmittel erst wirksam wird, nachdem der Stecker mit dem Steckerschaft in die Steckposition in der Aufnahmeöffnung des Gehäuses eingeführt, in der Steckposition mit dem Halteelement verbunden und zusammen mit dem Halteelement entgegen der Einführungsrichtung in die Arretierposition geführt worden ist.

Durch diese erfindungsgemäße Maßnahme werden nach dem Wirksamwerden der Sperre, sofort nach der Montage, aber insbesondere, wenn der Betriebszustand vorliegt, d.h. unter Betriebsdruck, auch bei möglichen Druckschwankungen des in den Leitungen fließenden Druckmittels Relativbewegungen von Stecker und Gehäuse gegeneinander unterbunden. Insbesondere bei hydraulischen Druckmitteln oder wenn die Arretierung auf Formschluß beruht, kann eine im wesentlichen starre Sperrung erreicht werden, welche effizienter als eine Arretierung mit einem Federelement oder dergleichen ist. Dies wirkt sich auch positiv auf die Dichtungsfunktionen der erfindungsgemäßen Steckverbindung aus, indem dadurch, daß eine Bewegung des Steckers nicht nur entgegen seiner Einführungsrichtung, sondern auch in Einführungsrichtung gesperrt ist, vorhandene Dichtungselemente vor Bewegungsreibung bewahrt und so geschont werden, was zu einer langen Standzeit und hoher Funktionssicherheit führt.

Das Sperrmittel kann eine mechanische Sperre sein, die nach Vorliegen der Arretierposition des Steckers selbsttätig oder manuell aktivierbar ist. Es kann sich bei dem Sperrmittel aber auch um eine Sperre handeln, die automatisch durch den Aufbau des Systemdruckes wirksam werden kann. Das in der Druckmittelleitung strömende Fluid, baut in diesem Fall ein die Sperrwirkung erzeugendes hydraulisches oder pneumatisches Druckpolster auf.

Eine Möglichkeit für eine wirksame Arretierung besteht darin, daß mindestens ein am Halteelement ausgebildetes Riegelteil Bestandteil der Sperre ist. Der andere Bestandteil der Sperre kann durch das Gehäuse mit einem dem Riegelteil korrespondierenden Aufbau gebildet sein. Es hat sich aber insbesondere unter den Gesichtspunkten einer Verringerung der dynamischen Belastung des Riegelteils des Halteelementes als günstig erwiesen, daß der zweite Bestandteil der Sperre ein in die Aufnahmeöffnung des Gehäuses einführbares zusätzliches Sperrelement ist. Dieses Sperrelement kann vor dem Einführen des Steckers in das Gehäuse mit dem Halteelement verbunden und in das Gehäuse eingelegt werden. Danach wird der Stecker in bekannter Weise in eine Steckposition in die Aufnahmeöffnung des Gehäuses eingeführt, in dieser Steckposition mit dem Halteelement verbunden und zusammen mit dem Halteelement entgegen der Einführungsrichtung in die Arretierposition geführt. In dieser Position ist - abgesehen von einem geringen durch die Fertigungstoleranzen bedingten Spiel - keine weitere Bewegung entgegen der Einführungsrichtung des Steckers mehr möglich. Gleichzeitig wird der Stecker erfindungsgemäß mittels der Sperre, die durch das am Halteelement befindliche Riegelteil und das zusätzliche Sperrelement gebildet ist, in der Arretierposition gegen eine Verschiebung in seiner Einführungsrichtung fixiert. D.h., während anfangs eine Bewegung des Steckers in Einführungsrichtung möglich war, ist diese Bewegung nun unterbunden. Damit wird ein in axialer Richtung im wesentlichen spielfreies System erreicht. Auch bei Druckschwankungen treten keine axialen Schwingungsbewegungen mehr auf.

Alternativ zu dieser Lösung kann erfindungsgemäß als Sperrmittel auch eine formschlüssig wirkende starre Sperre dienen, die sich am Steckerschaft innerhalb oder außerhalb der Aufnahmeöffnung des Gehäuses befindet. Ebenso liegt es im Rahmen der Erfindung als Sperrmittel vorteilhafterweise eine in der Aufnahmeöffnung des Gehäuses befindliche Druckmittelkammer vorzusehen.

Weitere vorteilhafte Ausgestaltungsmerkmale der Erfindung sind in den Unteransprüchen sowie der folgenden Beschreibung enthalten.

Anhand von sechs in der Zeichnung veranschaulichten, bevorzugten Ausführungsbeispielen soll im folgenden die Erfindung näher erläutert werden. Dabei zeigen:
- Fig. 1: die zur Hälfte im axialen Schnitt dargestellte Abbildung eines ersten Ausführungsbeispiels einer erfindungsgemäßen Steckverbindung mit einem Stecker in Arretierposition (Des weiteren wird auf Fig. 1 im Zusammenhang mit dem sechsten Ausführungsbeispiel der Erfindung Bezug genommen.),
- Fig. 2: einen axialen Halbschnitt eines Teilbereiches eines Gehäuses eines ersten Ausführungsbeispiels der erfindungsgemäßen Steckverbindung mit Halteelement und Sperrelement,
- Fig. 3: einen axialen Halbschnitt eines Teilbereiches der erfindungsgemäßen Steckverbindung nach Fig. 2 mit einem Stecker in Steckposition,
- Fig. 4: einen axialen Halbschnitt eines Teilbereiches der erfindungsgemäßen Steckverbindung nach Fig. 2 mit einem Stecker in Arretierposition,
- Fig. 5: eine Seitenansicht eines Sperrelementes gemäß der Erfindung, entsprechend den Fig. 1 bis 4,
- Fig. 6: eine Draufsicht auf ein Sperrelement nach Fig. 5,
- Fig. 7: einen axialen Halbschnitt eines Gehäuses eines zweiten Ausführungsbeispiels der erfindungsgemäßen Steckverbindung mit Halteelement, Sperrelement und eingeführtem Stecker,
- Fig. 8: einen axialen Halbschnitt der erfindungsgemäßen Steckverbindung nach Fig. 7 mit einem Stecker in einer Zwischenstellung beim Einführen in die Steckposition,
- Fig. 9: einen axialen Halbschnitt der erfindungsgemäßen Steckverbindung nach Fig. 7 mit einem Stecker in Steckposition,
- Fig. 10: einen axialen Halbschnitt der erfindungsgemäßen Steckverbindung nach Fig. 7 mit einem Stecker in Arretierposition,
- Fig. 11: einen axialen Halbschnitt eines Gehäuses eines dritten Ausführungsbeispiels der erfindungsgemäßen Steckverbindung mit Halteelement und einem Stecker in Steckposition,
- Fig. 12: einen axialen Halbschnitt der erfindungsgemäßen Steckverbindung nach Fig. 11 mit einem Stecker in Arretierposition,
- Fig. 13: einen axialen Halbschnitt durch ein viertes Ausführungsbeispiel der erfindungsgemäßen Steckverbindung im gesteckten und arretierten Zustand sowie unter Betriebsdruck,
- Fig. 14: einen axialen Halbschnitt eines Gehäuses eines fünften Ausführungsbeispiels der erfindungsgemäßen Steckverbindung mit Halteelement, Sperrelement und Stecker nach Beginn seiner Einführbewegung,
- Fig. 15: einen axialen Halbschnitt der erfindungsgemäßen Steckverbindung nach Fig. 14 mit einem Stecker in einer weiteren Phase seiner Einführbewegung,
- Fig. 16: einen axialen Halbschnitt der erfindungsgemäßen Steckverbindung nach Fig. 14 mit einem Stecker in Steckposition,
- Fig. 17: einen axialen Halbschnitt der erfindungsgemäßen Steckverbindung nach Fig. 14 mit einem Stecker in Arretierposition,
- Fig. 18: eine Unteransicht eines Sperrelementes eines sechsten Ausführungsbeispiel der erfindungsgemäßen Steckverbindung,
- Fig. 19: eine Vorderansicht des Sperrelementes aus Fig. 18,
- Fig. 20: eine Draufsicht des Sperrelementes aus Fig. 18,
- Fig. 21: eine Seitenansicht des Sperrelementes aus Fig. 18,
- Fig. 22: eine Einzelheit des Sperrelementes aus Fig. 19, betrachtet aus der Richtung des Pfeiles XXII,
- Fig. 23: einen Zuschnitt zur Herstellung des in den Fig. 18 bis 22 dargestellten Sperrelementes.

In den verschiedenen Figuren der Zeichnung sind dieselben Teile stets mit denselben Bezugszeichen versehen, so daß sie in der Regel auch jeweils nur einmal beschrieben werden.

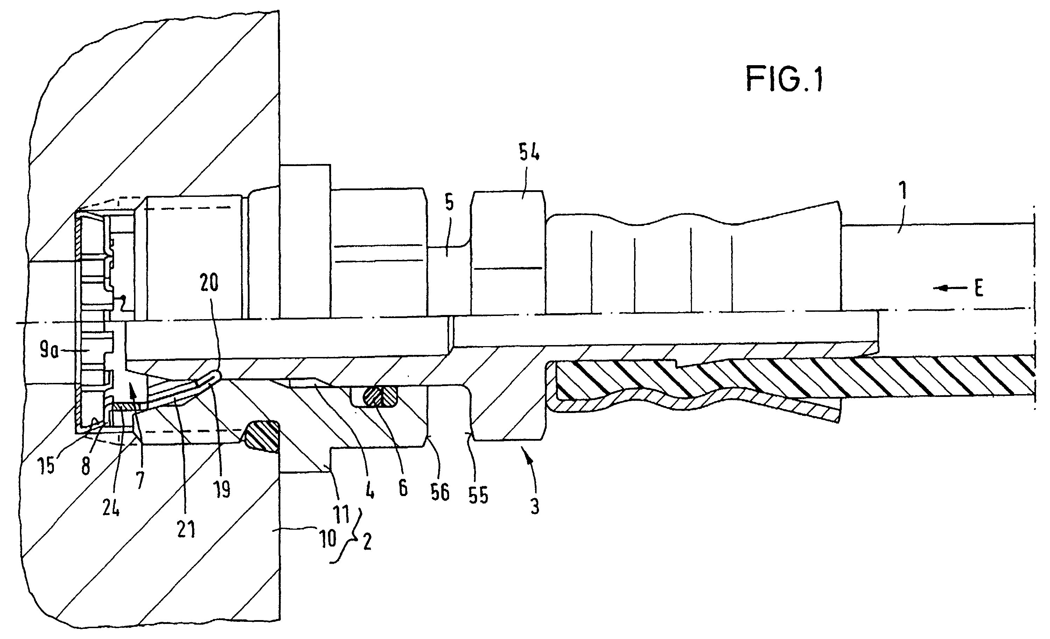

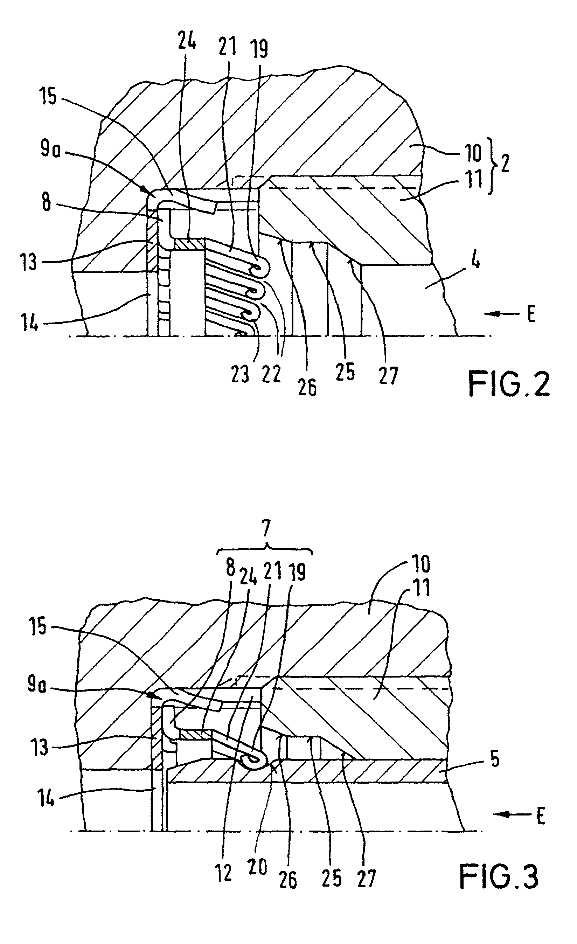

Fig. 1 veranschaulicht, wie erläutert, ein erstes Ausführungsbeispiel einer erfindungsgemäßen Steckverbindung als Ganzes, während die Fig. 2 bis 4 der Zeichnung die erfindungsgemäß wichtigsten Bauelemente und die einzelnen Montagephasen dieser Steckverbindung zeigen.

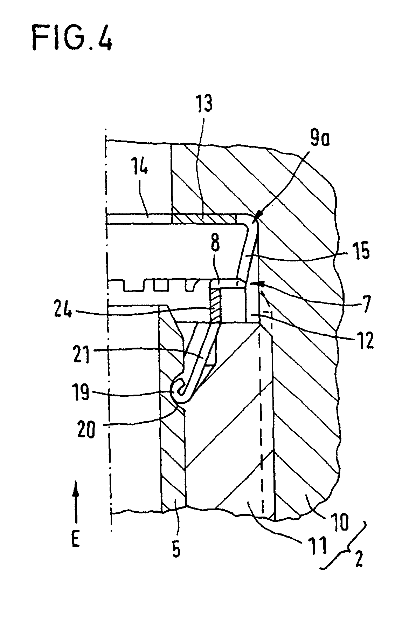

Eine erste Ausführung einer erfindungsgemäßen Steckverbindung für Druckmittelleitungen 1 (nur in Fig. 1 sichtbar) weist, wie die Fig. 1 bis 4 zeigen, ein Gehäuse 2 und einen Stecker 3 auf. Der Stecker 3 ist in einer Einführungsrichtung, die durch einen mit E bezeichneten Pfeil gekennzeichnet ist, in eine in Fig. 3 dargestellte Steckposition in eine Aufnahmeöffnung 4 des Gehäuses 2 einführbar. Diese Steckposition kann auch als eine erste Raststellung bezeichnet werden. Zum Einführen des Steckers 3 in die Aufnahmeöffnung 4 des Gehäuses 2 dient ein Steckerschaft 5. Der Steckerschaft 5 ist gegen die Aufnahmeöffnung 4 über mindestens eine Umfangsdichtung 6 abgedichtet. Ein weiteres Teil der erfindungsgemäßen Steckverbindung ist ein - grundsätzlich beliebig ausgebildetes - Halteelement 7. Der Stecker 3 ist, insbesondere in seiner Steckposition, mit dem Halteelement 7 verbindbar. Zusammen mit dem Halteelement 7 kann der Stecker 3 aus der Steckposition entgegen der Einführungsrichtung E in eine in Fig. 1 und 4 dargestellte Arretierposition geführt werden, wo er mittels des Halteelementes 7 gegen eine Verschiebung entgegen seiner Einführungsrichtung E fixierbar ist. Die fixierte Arretierposition könnte auch als eine zweite oder als Sicherheitsraststellung bezeichnet werden.

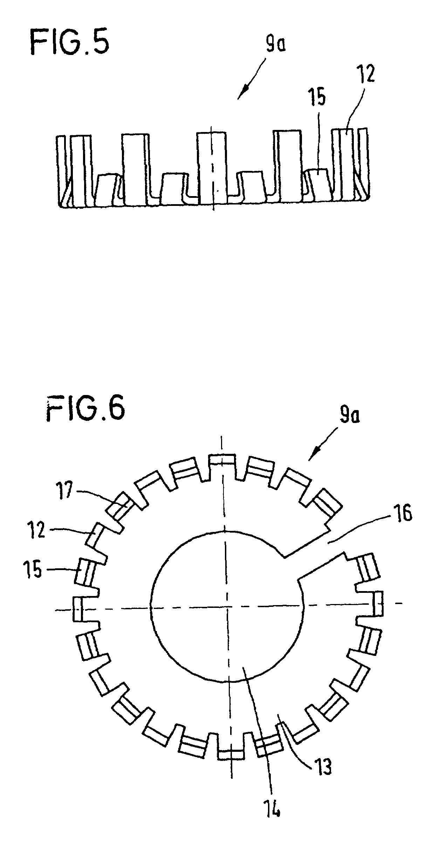

Erfindungsgemäß befindet sich in der Aufnahmeöffnung 4 des Gehäuses 2 eine axial wirkende Sperre 8, 9a, mit der der sich in der Arretierposition befindliche Stecker 3 gegen eine Verschiebung in seine Einführungsrichtung E formschlüssig sicherbar ist. Die Sperre 8, 9a besteht aus mehreren am Halteelement 7 ausgebildeten Riegelteilen 8 und aus einem in die Aufnahmeöffnung 4 des Gehäuses 2 einführbaren zusätzlichen Sperrelement 9a, welches als Einzelteil in den Fig. 5 und 6 dargestellt ist. Das Sperrelement 9a ist fertigungstechnisch günstig als Blechformteil ausgebildet.

Das Gehäuse 2 ist aus einem Basisteil 10 und aus einem darin lösbar befestigbaren Einsatzteil 11 aufgebaut. Ein solcher Aufbau ist für die Montage und Lösbarkeit der Steckverbindung zweckmäßig. Bei der Demontage kann der Stecker 3 nach Lösen des Einsatzteils 11 gemeinsam mit dem Halteelement 7 entnommen und das Sperrelement 9a aus dem Gehäuse 2 entfernt werden.

Das Sperrelement 9a besitzt radialsymmetrische Gestalt und weist am Umfang Distanzstücke 12 auf, mit denen es im Montagezustand zwischen dem Basisteil 10 und dem Einsatzteil 11 gehalten ist. Die Fig. 1 bis 4 zeigen das ringförmig ausgebildete Sperrelement 9a, welches mit seinen Distanzstücken 12, die durch Teile des Mantels des Sperrelementes 9a gebildet sind, zwischen das Basisteil 10 und das darin verschraubte Einsatzteil 11 des Gehäuses 2 geklemmt ist. Das Sperrelement 9a besitzt einen Boden 13 mit einer Bodenöffnung 14, mit dem es am Gehäuse 2, und zwar am Basisteil 10 anliegt. Die Bodenöffnung 14 ist für den Durchtritt des Druckmittels bestimmt.

Das Sperrelement 9a weist weiterhin Haken 15 auf, die bei Einwirkung von im wesentlichen quer zur Einführungsrichtung E des Steckers 3 wirkenden Kräften quer zur Einführungsrichtung E federn können. Die Haken 15 sind aus der Mantelfläche des ringförmigen Sperrelementes 9a freigeschnittene, spitzwinklig radial einwärts gebogene Stege. Die Haken 15 sind kürzer ausgebildet als die Distanzstücke 12. Dadurch, daß die Haken 15 in spitzem Winkel zur Einführungsrichtung E verlaufen, verhalten sie sich bei einer Krafteinwirkung aus dieser Richtung E starr. Diese hohe Steifigkeit bewirkt, daß die Haken 15 - im Gegensatz zu bekannten Federelementen - bei Einwirkung axialer Kräfte sich gar nicht, oder höchstens nur sehr geringfügig, elastisch deformieren.

Die Haken 15 wirken in mehrfacher Weise mit dem Halteelement 7 zusammen:

Zum einen sind das Halteelement 7 und das Sperrelement 9a über eine lösbare kraftschlüssige, zum Teil von den Haken 15 gebildete Verbindung 8, 15 zusammenfügbar und können gemeinsam in der in Fig. 2 dargestellten Weise im Gehäuse 2 plaziert werden. Das Halteelement 7 liegt in dieser Verbindung 8, 15 zumindest nach dem Einschieben des Stekkers 3 in seine Steckposition (Fig. 3) am Boden 13 des Sperrelementes 9a an. Damit das Halteelement 7 in das Sperrelement 9a eingefügt werden kann, ist das ringförmige Sperrelement 9a an einer Stelle seines Umfanges durch einen axial durchgehenden Schlitz 16 unterbrochen. Das Sperrelement 9a wird auf diese Weise radial deformierbar, es kann elastisch aufgeweitet oder im Durchmesser verengt werden.

Zum anderen weist das Sperrelement 9a mindestens eine Anlagefläche 17 für das Halteelement 7 auf. Im Ausführungsbeispiel sind am Sperrelement 9a mehrere Anlageflächen 17 für das Halteelement 7 vorgesehen, welche sich an den Haken 15 befinden. Das Halteelement 7 kommt bei Vorliegen in Fig. 4 gezeigten Arretierstellung des Steckers 3 an den Anlageflächen 17 des Sperrelementes 9a zur Anlage. Dadurch wird das axiale Spiel in Einführungsrichtung E des Steckers 3 verhindert.

Wie oben bereits erwähnt, kann in Verbindung mit der erfindungsgemäßen Steckverbindung praktisch ein beliebiges Halteelement 7, wie beispielsweise ein Drahtsprengring, eine Federringklammer oder dergleichen, verwendet werden.

Gemäß dem dargestellten Ausführungsbeispiel handelt es sich bei dem Halteelement 7 vorteilhafterweise um ein ringförmiges und radialelastisches Teil, wie es in ähnlicher Form auch bereits in dem oben genannten Gebrauchsmuster DE-U-295 01 006 beschrieben ist, weshalb auf das genannte Gebrauchsmuster an dieser Stelle Bezug genommen wird. Das Halteelement 7 besitzt an einem Ende radial sternartig nach außen weisende Ansätze 8, die bei Vorliegen der Arretierposition des Steckers 3 am Sperrelement 9a zur Anlage kommen und so die Riegelteile 8 des Halteelementes 7 bilden, welche Bestandteil der Sperre 8, 9a sind. Vorteilhafterweise können diese Ansätze 8 durch umgebogene Blechlaschen gebildet sein und sind so sehr leicht zu fertigen. Die radial nach außen gebogenen Ansätze 8 und die Haken 15 des Sperrelementes 9a bilden die beschriebene lösbare kraftschlüssige Verbindung 8, 15 zwischen dem Sperrelement 9a und dem Halteelement 7, wobei das Halteelement 7 durch die Ansätze 8 in zentrierter Lage innerhalb des Sperrelementes 9a gehalten ist.

Das als Blechformteil ausgebildete Halteelement 7 weist einen umgebördelten Arretierringabschnitt 19 zum Eingreifen in eine z.B. rillenartige Außenringnut 20 des Steckerschaftes 5 sowie einen sich in Einführungsrichtung E des Stekkers 3 an den Arretierringabschnitt 19 anschließenden und insbesondere im wesentlichen konisch erweiternden Ringabschnitt 21 auf. Der Arretierringabschnitt 19 ist dadurch radialelastisch verformbar, daß er durch über den Ringumfang verteilt angeordnete, sich in axialer Richtung in den konischen Ringabschnitt 21 erstreckende Schlitze 22 in Ringsektoren 23 unterteilt ist. Im dargestellten Beispiel handelt es sich um eine Vielzahl von Schlitzen 22 und entsprechenden Ringsektoren 23, die somit in der Art einer Halterosette radialelastische Federarme bilden.

Auf der dem Arretierringabschnitt 19 axial abgekehrten Seite des Halteelementes 7 befinden sich die Ansätze 8 zur Abstützung und Zentrierung im Sperrelement 9a (Fig. 2, 3) bzw. zur Anlage am Sperrelement 9a (Fig. 1, 4). Zwischen dem konischen Ringabschnitt 21 und den Ansätzen 8 ist ein ringförmiger, im wesentlichen zylindrischer bzw. hohlzylindrischer Übergangsabschnitt 24 angeordnet.

Für die Montage des Halteelementes 7 ist es zudem vorteilhaft, wenn das Halteelement 7 an einer Stelle seines Ringumfanges über einen durchgehenden Schlitz (in der Zeichnung nicht erkennbar) unterbrochen ist.

Das Gehäuse 2 weist eine dem Aufbau des Halteelementes 7 korrespondierende Gestalt auf: Die Aufnahmeöffnung 4 des Gehäuses 2 besitzt eine Innenkontur mit einem Ringanlagebereich 25 für den etwa axialmittigen Bereich des Halteelementes 7, mit einer Erweiterung 26 für den Endbereich des konischen Ringabschnittes 21 und mit einer Verengung 27 zum Eindrücken des Arretierringabschnittes 19 in die Außenringnut 20 des Steckerschaftes 5.

Die Montage der erfindungsgemäßen Steckverbindung geht folgendermaßen vor sich:

Zunächst wird das Halteelement 7 mit dem Sperrelement 9a verbunden, in das Gehäuses 2 eingelegt und zwischen dessen Basisteil 10 und Einsatzteil 11 geklemmt. Die Federarme bzw. Ringsektoren 23 im Arretierringabschnitt 19 des Halteelementes 7 liegen dabei frei im Gehäuse 2, während die Ansätze 8 am anderen Ende des Halteelementes 7 die Abstützung und Zentrierung des Halteelementes 7 im Sperrelement 9a bewirken (Fig. 2).

Danach wird der Stecker 3 in Einführungsrichtung E bis in die Steckposition in die Aufnahmeöffnung 4 des Gehäuses 2 eingeführt und mit dem Halteelement 7 verbunden. Die Ringsektoren 23 im Arretierringabschnitt 19 des Halteelementes 7 weiten sich beim Einführen des Steckers 3 radial auf, und der umgebördelte Arretierringabschnitt 19 des Halteelementes 7 gleitet in die rillenartige Außenringnut 20 des Steckerschaftes 5. Die Ringsektoren 23 federn radial nach innen und der Arretierringabschnitt 19 verrastet mit der Außenringnut 20. Die durch die Einzelabmessungen des Arretierringabschnittes 19, des konischen Ringabschnittes 21 und des Übergangsabschnittes 24 bestimmte Ringhöhe des Halteelementes 7 gewährleistet dabei, daß das Halteelement 7 nach dem Einschieben des Steckers 3 in die Steckposition am Boden 13 des Sperrelementes 9a anliegt. Die oben erwähnte Steckposition (erste Raststellung) des Steckers 3 ist damit erreicht (Fig. 3).

Schließlich wird der Stecker 3 zusammen mit dem Halteelement 7 entgegen seiner Einführungsrichtung E in die Arretierposition (Fig. 1, 4) geführt. Die kraftschlüssige Verbindung 8, 15 zwischen dem Halteelement 7 und dem Sperrelement 9a wird dabei gelöst. Die spitzwinklig radial einwärts gebogenen Haken 15 an der Mantelfläche des ringförmigen Sperrelementes 9a federn radial nach außen. Durch den an einer Stelle des Ringumfanges des Halteelementes 7 vorgesehenen durchgehenden Schlitz kann sich gleichzeitig außerdem der Durchmesser des Halteelementes 7 verringern, so daß dieses leicht aus dem Sperrelement 9a herausgleiten kann.

Bei der Rückführung des Steckers 3 entgegen seiner Einführungsrichtung E in die Arretierposition kommt in der Aufnahmeöffnung 4 des Gehäuses 2 der etwa axialmittige Bereich des Halteelementes 7 in den Ringanlagebereich 25 zu liegen; in die Erweiterung 26 der Aufnahmeöffnung 4 gelangt der Endbereich des konischen Ringabschnittes 21 des Halteelementes 7 und durch die Verengung 27 der Aufnahmeöffnung 4 wird der Arretierringabschnitt 19 in die Außenringnut 20 des Steckerschaftes 5 gedrückt. Der Arretierringabschnitt 19 verhindert im Zusammenwirken mit der Verengung 27 der Aufnahmeöffnung 4 eine weitere Verschiebung des Steckers 3 entgegen seiner Einführungsrichtung E. Gleichzeitig wird die axial wirkenden Sperre 8, 9a wirksam, welche den Stecker 3 gegen eine Verschiebung in Einführungsrichtung E formschlüssig sichert. Die radial nach außen weisenden Ansätze 8 des Halteelementes 7 kommen an den Anlageflächen 17 der Haken 15 des Sperrelementes 9a zur Anlage und bilden so die Riegelteile 8 des Halteelementes 7.

Das Gesamtmaß aus der durch die Einzelabmessungen des Arretierringabschnittes 19, des konischen Ringabschnittes 21 und des Übergangsabschnittes 24 bestimmte Ringhöhe des Halteelementes 7 sowie aus der Höhe der Haken 15 des Sperrelementes 9a, welches dem Gesamtmaß aus der Länge des Ringanlagebereiches 25, der Erweiterung 26 und der Verengung 27 der Aufnahmeöffnung 4 entspricht, gewährleistet dabei, daß Relativverschiebungen von Stecker 3 und Gehäuse 2 auch bei auftretenden Druckschwankungen des Druckmittels in der Leitung 1 nahezu vollständig ausgeschlossen werden können. Das Vorliegen der korrekten Sicherheitsraststellung ist bei der Montage vorteilhafterweise dadurch fühlbar, daß der Stecker 3 in axialer Richtung nicht mehr bewegt werden kann.

Wie bereits erwähnt, kann die erfindungsgemäße Steckverbindung in einfacher Weise gelöst werden: Bei der Demontage wird der Stecker 3 nach Lösen des Einsatzteils 11 gemeinsam mit dem Halteelement 7 entnommen und das Sperrelement 9a aus dem Gehäuse 2 entfernt.

Das Gehäuse 2 kann unterschiedlich gestaltet sein: Beispielsweise wird aus Fig. 1, welche die Steckverbindung als Ganzes zeigt, deutlich, daß das Gehäuse 2 aus einem Basisteil 10 gebildet ist, welches aus dem Boden einer Druckmittel-Vorrichtung besteht, und daß das im Basisteil 10 lösbar befestigbaren Einsatzteil 11 eine in das Bodenloch der Druckmittel-Vorrichtung einschraubbare Überwurfschraube ist.

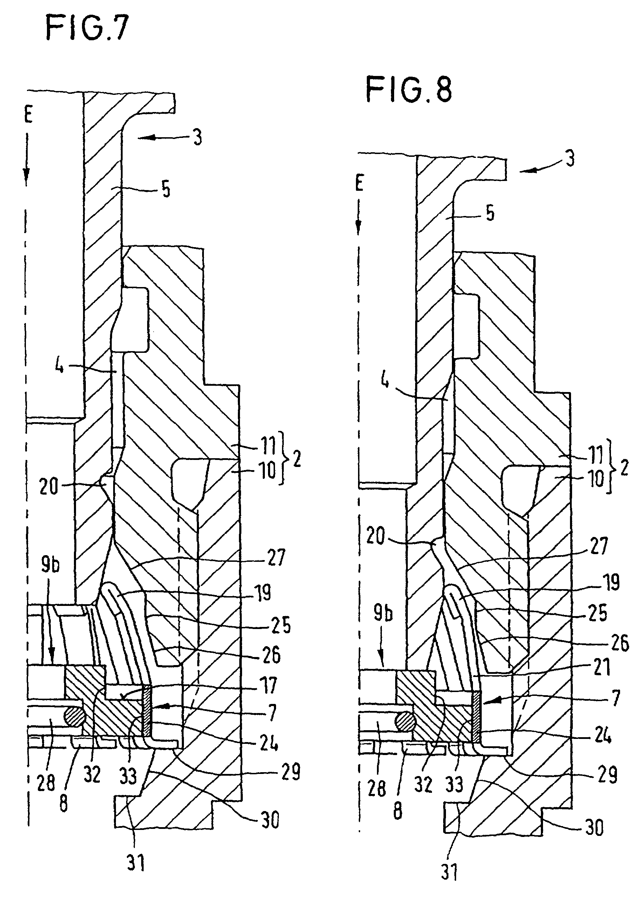

Die Fig. 7 bis 10 der Zeichnung veranschaulichen die erfindungsgemäß wichtigsten Bauelemente und die einzelnen Montagephasen eines zweiten Ausführungsbeispiels der Steckverbindung. Das zweite Ausführungsbeispiel gleicht im grundsätzlichen Aufbau des Gehäuses 2, des Steckers 3 und des Halteelementes 7 dem ersten Ausführungsbeispiel. Lediglich das Sperrelement 9b und der Endbereich des Gehäuses 2, welcher sich ausgehend von der Einführungsrichtung E des Steckers 3 am hinteren Ende der Aufnahmeöffnung 4 befindet, besitzen eine vom ersten Ausführungsbeispiel abweichende Gestalt.

Das Sperrelement 9b des zweiten Ausführungsbeispiels ist vorzugsweise ein Kunststoffteil. Wie im ersten Ausführungsbeispiel ist es ringförmig ausgebildet und an einer Stelle seines Umfanges durch einen axial durchgehenden Schlitz unterbrochen (in der Zeichnung nicht sichtbar), wodurch das Sperrelement 9b radialelastisch verformbar ist. Wie die Fig. 7 bis 11 zeigen, liegt im Inneren des Sperrelementes 9b zur Unterstützung der radialelastischen Rückverformung des Sperrelementes 9b ein Stahlfederring 28.

Das Gehäuse 2 weist in der Innenkontur der Aufnahmeöffnung 4 eine sich in Einführungsrichtung E des Steckers 3 an die Erweiterung 26 anschließende Stufe 29, einen sich von der Stufe 29 ausgehend konisch verengenden Abschnitt 30 und eine endseitige Schulter 31 auf.

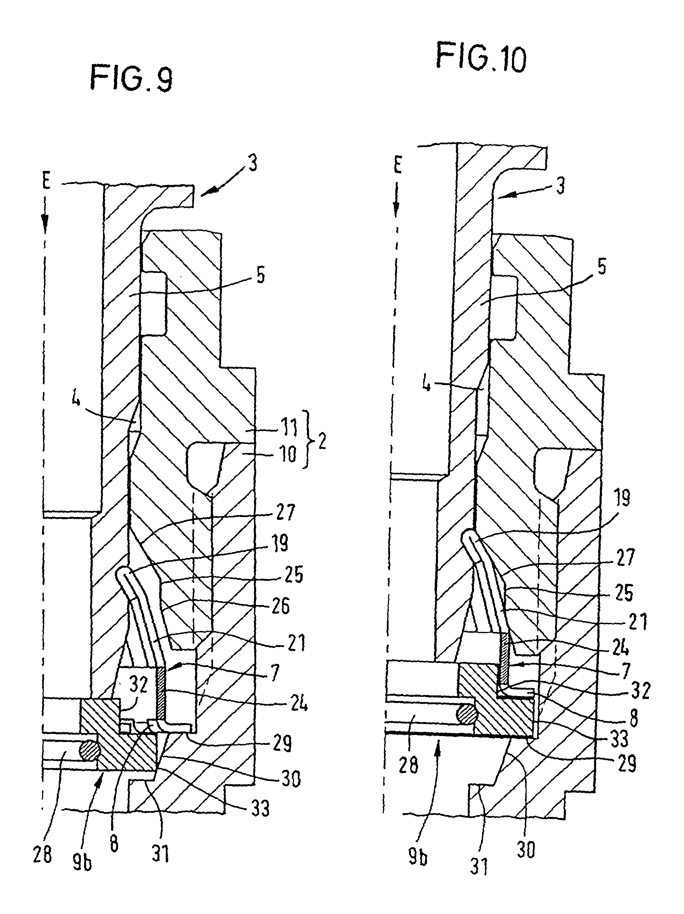

Das Sperrelement 9b besitzt einen gestuften Außendurchmesser 32, 33. Wie Fig. 10 zeigt entspricht dabei die innenliegende Stufe 32 etwa dem Durchmesser des zylindrischen Übergangsabschnittes 24 des Halteelementes 7 und die außenliegende Stufe 33 etwa dem maximalen Durchmesser der Erweiterung 26 in der Innenkontur des Gehäuses 2. Wenn das Sperrelement 9b radialelastisch deformiert ist, entspricht die außenliegende Stufe 33 sowohl dem Durchmesser des zylindrischen Übergangsabschnittes 24 des Halteelementes 7 (Fig. 7 bis 9) als auch gleichzeitig einem Innendurchmesser des Gehäuses 2 im Bereich des sich konisch verengenden Abschnittes 30 zwischen der sich an die Erweiterung 26 anschließende Stufe 29 und der endseitigen Schulter 31 (Fig. 9).

In Übereinstimmung mit dem ersten Ausführungsbeispiel der Erfindung sind das Halteelement 7 und das Sperrelement 9b über eine lösbare kraftschlüssige Verbindung 24, 33 zusammenfügbar. Diese Verbindung 24, 33 wird durch die mittels des Federringes 28 unterstützte Anpressung der außenliegenden Durchmesserstufe 33 des Sperrelementes 9b an den Innendurchmesser des zylindrischen Übergangsabschnittes 24 des Halteelementes 7 erzeugt.

Das Sperrelement 9b weist eine Anlagefläche 17 für das Halteelement 7 auf, die durch eine (bis auf den im Ring befindlichen Schlitz) kreisringförmige Fläche zwischen der Durchmesserstufe 32, 33 gebildet ist. Dort kommen die radial nach außen weisenden Ansätze 8 des das Halteelementes 7 bei Vorliegen der Arretierposition des Steckers 3 (Fig. 10) am Sperrelement 9b zur Anlage. Wie beim ersten Ausführungsbeispiel ist bei der Montage das Sperrelement 9b bestimmungsgemäß in die Aufnahmeöffnung 4 des Gehäuses 2 einführbar.

Die Montage der erfindungsgemäßen Steckverbindung geht folgendermaßen vor sich:

Zunächst wird das Halteelement 7 mit dem Sperrelement 9b unter Vorspannung durch den Federring 28 auf die oben beschriebene Weise verbunden und in das Gehäuses 2 eingelegt. Die Federarme bzw. Ringsektoren 23 im Arretierringabschnitt 19 des Halteelementes 7 liegen dabei frei im Gehäuse 2, während die Ansätze 8 am anderen Ende des Halteelementes 7 die Abstützung und Zentrierung des Halteelementes 7 im Sperrelement 9b bewirken (Fig. 7).

Danach wird der Stecker 3 in Einführungsrichtung E bis in die Steckposition in die Aufnahmeöffnung 4 des Gehäuses 2 eingeführt (Fig. 7) und mit dem Halteelement 7 verbunden (Fig. 8). Die Ringsektoren 23 im Arretierringabschnitt 19 des Halteelementes 7 weiten sich beim Einführen des Stekkers 3 radial auf, und der umgebördelte Arretierringabschnitt 19 des Halteelementes 7 gleitet in die rillenartige Außenringnut 20 des Steckerschaftes 5. Die Ringsektoren 23 federn radial nach innen und der Arretierringabschnitt 19 verrastet mit der Außenringnut 20. Die durch die Einzelabmessungen des Arretierringabschnittes 19, des konischen Ringabschnittes 21 und des Übergangsabschnittes 24 bestimmte Ringhöhe des Halteelementes 7 sowie die darauf abgestimmte Entfernung der Außenringnut 20 vom Ende des Stekkers 3 gewährleisten dabei, daß die kraftschlüssige Verbindung 24, 33 zwischen dem Halteelement 7 und dem Sperrelement 9b dabei gelöst wird. Das Sperrelement 9b wird durch das Einschieben des Steckers 3 in die Steckposition aus dem Halteelement 7 in den Bereich des sich konisch verengenden Abschnittes 30 der Aufnahmeöffnung 4 gedrückt, der zwischen der sich an die Erweiterung 26 anschließende Stufe 29 und der endseitige Schulter 31 liegt. Die erste Raststellung (Steckposition, Fig. 9) des Steckers 3 ist damit erreicht.

Schließlich wird der Stecker 3 zusammen mit dem Halteelement 7 entgegen seiner Einführungsrichtung E in die Arretierposition (Fig. 10) geführt. Wie beim ersten Ausführungsbeispiel kommt dabei in der Aufnahmeöffnung 4 des Gehäuses 2 der etwa axialmittige Bereich des Halteelementes 7 in den Ringanlagebereich 25 zu liegen; in die Erweiterung 26 der Aufnahmeöffnung 4 gelangt der Endbereich des konischen Ringabschnittes 21 des Halteelementes 7 und durch die Verengung 27 der Aufnahmeöffnung 4 wird der Arretierringabschnitt 19 in die Außenringnut 20 des Steckerschaftes 5 gedrückt. Der Arretierringabschnitt 19 verhindert im Zusammenwirken mit der Verengung 27 der Aufnahmeöffnung 4 eine weitere Verschiebung des Steckers 3 entgegen seiner Einführungsrichtung E. Gleichzeitig wird die axial wirkenden Sperre 8, 9b wirksam, indem das Sperrelement 9b entgegen der Einführungsrichtung E des Steckers aus dem konischen Abschnitt 30 der Aufnahmeöffnung 4 gleitet. Dabei weitet es sich unter der Wirkung des Federringes 28 radial auf. Das Sperrelement 9b gleitet unter weiterer Aufweitung in den erweiterten Bereich 26 in der Aufnahmeöffnung 4 des Gehäuses 2 und kommt in Einführungsrichtung E des Steckers axial an der Stufe 29 im Gehäuse 2 zur Anlage. Gleichzeitig kommen die radial nach außen weisenden Ansätze 8 des das Halteelementes 7 an der Anlagefläche 17 des Sperrelementes 9b zur Anlage. So ist der Stecker 3 gegen eine Verschiebung in Einführungsrichtung E formschlüssig gesichert. Die zweite Raststellung ist erreicht. Die radial nach außen weisenden Ansätze 8 bilden auch hier die Riegelteile 8 des Halteelementes 7.

Das Gesamtmaß aus der durch die Einzelabmessungen des Arretierringabschnittes 19, des konischen Ringabschnittes 21 und des Übergangsabschnittes 24 bestimmte Ringhöhe des Halteelementes 7 sowie aus der Höhe des Sperrelementes 9b, welches dem Gesamtmaß aus der Länge des Ringanlagebereiches 25, der Erweiterung 26 und der Verengung 27 der Aufnahmeöffnung 4 entspricht, sichert, daß schädliche Relativverschiebungen von Stecker 3 und Gehäuse 2 bei Druckschwankungen des Druckmittels in der Leitung 1 ausgeschlossen werden.

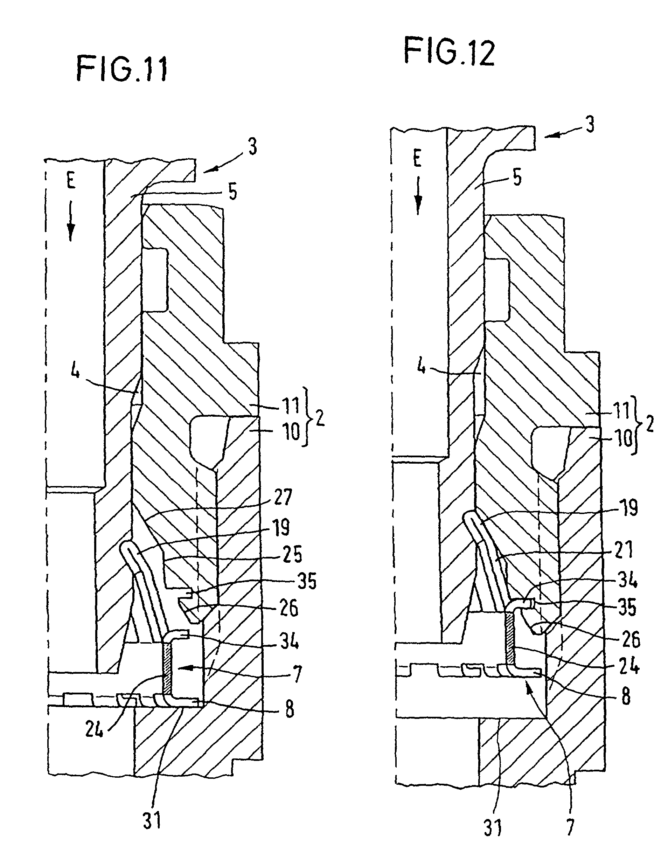

Das in den Fig. 11 und 12 dargestellte dritte Ausführungsbeispiel der Erfindung zeichnet sich dadurch aus, daß das Halteelement 7 auch im mittleren Bereich nach außen weisende Ansätze 34 besitzt und die Aufnahmeöffnung 4 des Gehäuses 2 im Bereich der Erweiterung 26 ihrer Innenkontur an ihrem Umfang verlaufende nutartige Vertiefungen 35 aufweist. Vorzugsweise können vier Ansätze 34 und Vertiefungen 35 vorgesehen sein. Die Ansätze 34 sind durch eine Kürzung und ein Biegen nach außen leicht aus den beschriebenen Ringsektoren 23 im konischen Ringabschnitt 21 des Halteelementes 7 herstellbar.

Wie in den ersten beiden Ausführungsbeispielen ist das durch die Ansätze 33 und die nutartige Vertiefung in der Aufnahmeöffnung 4 des Gehäuses 2 gebildete Sperr-mittel eine formschlüssig wirkende starre Sperre, die sich innerhalb der Aufnahmeöffnung 4 des Gehäuses 2 befindet und in der Arretierposition des Steckers 3 eine Bewegung des Steckers in seine Einführungsrichtung E verhindert. Der grundsätzliche Aufbau des Gehäuses 2, Steckers 3 und Halteelementes 7 der erfindungsgemäßen Steckverbindung stimmt mit dem der ersten beiden Ausführungsbeispiele überein. Im Gegensatz zu den ersten beiden Ausführungsbeispielen ist aber bei dieser Ausführung kein zusätzliches Sperrelement 9a, 9b als Bestandteil der Sperrmittels notwendig. Die am Halteelement 7 befindlichen, radial nach außen weisenden Ansätze 34 wirken vorteilhafterweise als Riegelteile direkt mit dem Gehäuse 2 zusammen, unterliegen so im Betriebszustand bei Druckschwankungen des Fluids allerdings einer hohen dynamischen Belastung.

Aus Fig. 11, die die erfindungsgemäße Steckverbindung in Steckposition zeigt, ist ersichtlich, daß das Gehäuse 2 in der Innenkontur der Aufnahmeöffnung 4 endseitig eine sich in Einführungsrichtung E des Steckers 3 an die Erweiterung 26 anschließende Schulter 31 aufweist. Hier kommt das Halteelement 7 mit seinen seitlichen Ansätzen 8 bei in der Steckposition befindlichem Stecker 3 zum Anschlag, wenn die Ringsektoren 23 radial nach innen gefedert sind und der Arretierringabschnitt 19 des Halteelementes 7 mit der Außenringnut 20 des Steckers 3 verrastet ist.

Bei der Rückführung des Steckers 3 entgegen seiner Einführungsrichtung E gleiten in der Aufnahmeöffnung 4 des Gehäuses 2 die am Halteelement 7 befindlichen, radial nach außen weisenden Ansätze 34 über den konisch ausgebildeten Abschnitt 26 in die nutartige Vertiefungen 35 am Umfang der Aufnahmeöffnung 4 des Gehäuses 2. Die in Fig. 12 dargestellte Arretierposition des Steckers 3 ist erreicht. Eine axiale Relativbewegung des Steckers 3 gegen das Gehäuse 2 ist - abgesehen von einem geringfügigen Spiel, das für dieses und die bisher beschriebenen Beispiele etwa im Bereich von 1 mm liegt - auch bei Druckschwankungen des Druckmittels in der Leitung 1 nicht mehr möglich.

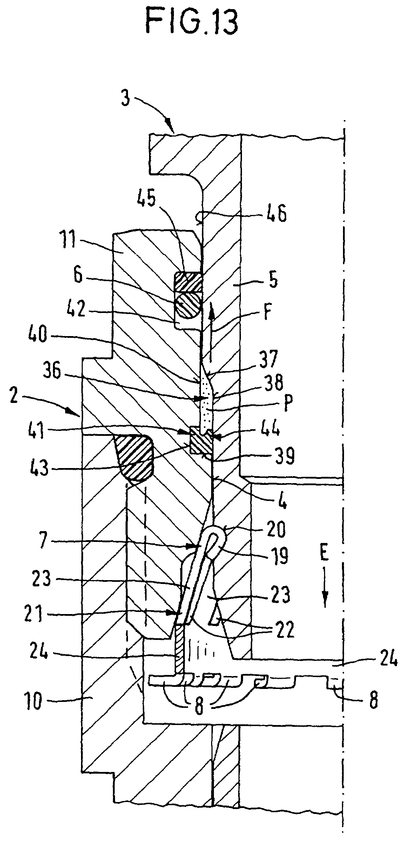

Bei dem in Fig. 13 dargestellten vierten Ausführungsbeispiel der Erfindung besteht eine erfindungsgemäße Steckverbindung für Druckmittelleitungen 1 aus einem Gehäuse 2 und einem Stecker 3. Der Stecker 3 ist mit einem Steckerschaft 5 in eine Aufnahmeöffnung 4 des Gehäuses 2 einsteckbar. Der Steckerschaft 5 ist gegen die Aufnahmeöffnung 4 über (mindestens) eine Umfangsdichtung 6 abgedichtet. Zudem ist der Stecker 3 bzw. der Steckerschaft 5 mittels eines Halteelementes 7 gegen Lösen (d.h. gegen Entnahme entgegen der Einführungsrichtung E) arretierbar.

Erfindungsgemäß ist im Bereich zwischen dem Steckerschaft 5 und der Aufnahmeöffnung 4 des Gehäuses 2 eine Druckmittelkammer 36 derart gebildet, daß bei Druckbeaufschlagung der gesteckten und arretierten Verbindung in der Druckmittelkammer 36 ein Druckpolster p aufgebaut wird, wodurch der Stecker 3 entgegen seiner Einführungsrichtung E mit einer Vorspannkraft F beaufschlagt wird. Die Druckmittelkammer 36 ist bevorzugt als in Umfangsrichtung durchgehende Ringkammer radial zwischen einem über eine Stufe 37 im Durchmesser reduzierten, dem einsteckseitigen Schaftende zugekehrten Abschnitt 38 des Steckerschaftes 5 einerseits und einem über eine Stufe 39 im Durchmesser erweiterten, mündungsöffnungsseitigen Abschnitt 40 der Aufnahmeöffnung 4 andererseits angeordnet. Der über die Stufe 37 größere Durchmesser des Steckerschaftes 5 entspricht etwa dem Durchmesser des erweiterten Bereichs 40 der Aufnahmeöffnung 4, und der kleinere Durchmesser des Bereichs 38 des Steckerschaftes 5 ist an den kleinsten Durchmesser der Aufnahmeöffnung 4 angepaßt. Dabei sind die Stufe 37 des Steckerschaftes 5 - in axialer Steckrichtung gesehen - auf der entgegen der Einführungsrichtung E des Steckers 3 weisenden Seite und die Stufe 39 der Aufnahmeöffnung 4 auf der gegenüberliegenden, in Einführungsrichtung E weisenden Seite der Druckmittelkammer 36 angeordnet. Hierdurch wirkt der Druck des Druckpolsters p in axialer Richtung auf die Flächen (A) der Stufen 37, 39, so daß über die Beziehung F = p A die Vorspannkraft F erzeugt wird.

Um nun den erforderlichen Betriebsdruck p in der Druckmittelkammer 36 halten, d.h. kammern zu können, ist die Druckmittelkammer 36 einerseits auf ihrer in entgegen der Einführungsrichtung E des Steckers 3 weisenden Seite, d.h. "nach außen" durch die oben erwähnte Umfangsdichtung 6 sowie andererseits auf ihrer in Einführungsrichtung E weisenden Seite, d.h. "nach innen", durch eine spezielle Ringdichtung 41 abgedichtet. Diese spezielle Ringdichtung 41 ist nun erfindungsgemäß konstruktiv (formmäßig sowie materialspezifisch) derart rückschlagventilartig ausgebildet, daß bei Druckbeaufschlagung Druckmittel von innen über die Ringdichtung 41 in die Druckmittelkammer 36 gelangen kann, dann aber dort als Druckpolster p gehalten ("gekammert") wird.

Bei der beschriebenen Ausgestaltung liegt folglich die Umfangsdichtung 6 "oberhalb" der Druckmittelkammer 36. Aus diesem Grund muß beim Einstecken die den Durchmesser vergrößernde Stufe 37 des Steckerschaftes 5 die Umfangsdichtung 6 passieren. Hierzu ist es vorteilhaft, wenn diese Stufe 37 des Steckerschaftes 5 als Konusfläche ausgebildet ist, da hierdurch die Umfangsdichtung 6 leichter radial nach außen in eine zugehörige Ringnut 42 des Gehäuses 2 verpreßt werden kann.

Die spezielle Ringdichtung 41 ist vorzugsweise in axialer Richtung auf der Stufe 39 des Gehäuses 2 abgestützt, und zwar sitzt die Ringdichtung 41 bevorzugt ein einer in Einführungsrichtung E von der Stufe 39 begrenzten Ringnut 43 des Gehäuses 2. Dabei weist die Ringdichtung 41 auf ihrer radial nach innen, also in Richtung des Steckerschaftes 5 weisenden Seite eine ringförmige, schräg in entgegen der Einführungsrichtung E des Steckers 3 bzw. in die Druckmittelkammer 36 und schräg gegen den im Durchmesser reduzierten Bereich 38 des Steckerschaftes 5 ausgerichtete und hierdurch als Rückschlagventilelement fungierende Dichtlippe 44 auf. Hierdurch kann das Druckmittel beim ersten Druckaufbau in axialer Richtung zwischen dem Abschnitt 38 des Steckerschaftes 5 und der sich hierzu radial aufweitenden Dichtlippe 44 der Ringdichtung 41 in die erfindungsgemäße Druckmittelkammer 36 hineinströmen und dort das Druckpolster p aufbauen. Der sich innerhalb der Druckmittelkammer 36 aufbauende Druck p bewirkt dann, daß die Dichtlippe 44 fest radial nach innen gegen den Abschnitt 38 des Steckerschaftes 5 angepreßt wird; das Druckpolster p wird hierdurch in der Druckmittelkammer 36 eingeschlossen. Im Falle eines hydraulischen, praktisch inkompressiblen Druckmittels wird hierdurch wie bei den vorstehend beschriebenen Ausführungsbeispielen der Erfindung eine praktisch starre Abstützung zwischen dem Stecker 3 und dem Gehäuse 2 erreicht. Im Falle eines pneumatischen, kompressiblen Druckmittels bildet das in der Druckmittelkammer 36 enthaltene Druckpolster p praktisch ein elastisches Federelement. In jedem Fall wird hierdurch der Stecker 3 mit einer entgegen der Einführungsrichtung E des Steckers 3 wirkenden Kraft F beaufschlagt. Im Gegensatz zu mechanischen elastischen Federelementen ist bei der Montage jedoch keine Federkraft zu überwinden, da das Sperrmittel erst nach der Einnahme der Arretierposition durch den Stecker 3, in diesem Fall sogar erst im Betriebszustand wirksam wird.

Vorteilhafterweise bleibt das Druckpolster p aufgrund der erfindungsgemäßen beidseitigen Abdichtung auch nach Absinken des inneren Betriebsdruckes noch erhalten, und zwar jedenfalls zumindest so lange, daß eventuell auftretende Druckschwankungen nicht zu schädlichen Relativbewegungen führen können.

Wie sich ferner aus Fig. 13 ergibt, sitzt die Umfangsdichtung 6 bevorzugt in Kombination mit einem Stützring 45 in der Innenringnut 42 innerhalb der Aufnahmeöffnung 4 des Gehäuses 2. Der Stützring 45 ist im dargestellten Beispiel auf der entgegen der Einführungsrichtung E des Steckers 3 weisenden Seite der Umfangsdichtung 6 angeordnet. Die Umfangsdichtung 6 wirkt dichtend mit dem Steckerschaft 5 zusammen, und zwar in dessen größerem Durchmesserabschnitt 46. Das als Blechformteil ausgebildete Halteelement 7 ist wie in den vorangegangenen Ausführungsbeispielen aufgebaut und besitzt die gleiche Wirkungsweise.

Für die Lösbarkeit der Steckverbindung ist es, wie bereits beschrieben, zweckmäßig, wenn das Gehäuse 2 aus zwei lösbar miteinander verbundenen Teilen besteht, und zwar aus einem Basisteil 10 und einem Einsatzteil 11. Hierdurch kann der Stecker 3 nach Lösen des Einsatzteils 11 gemeinsam mit dem Halteelement 7 entnommen werden.

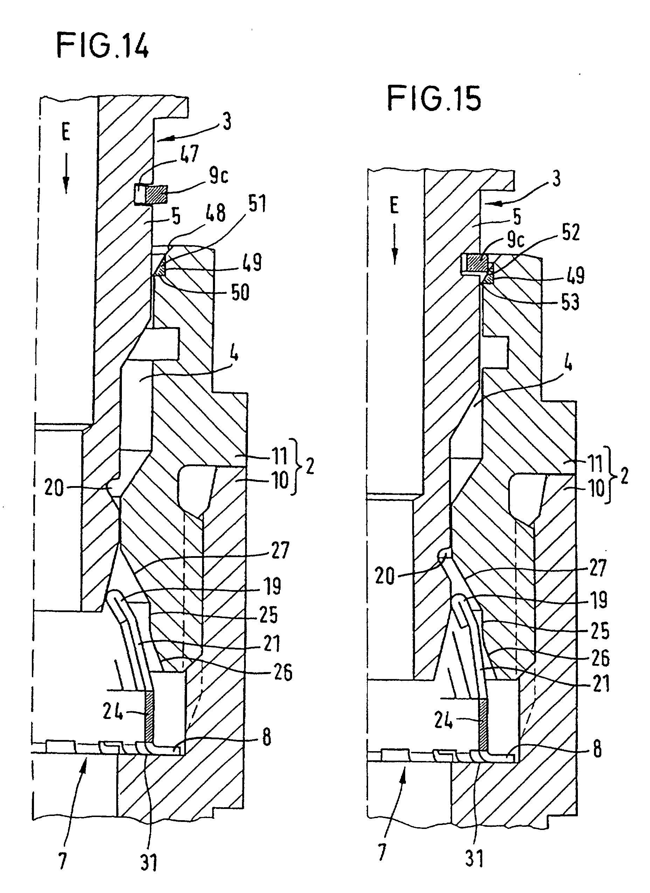

Die Fig. 14 bis 17 der Zeichnung veranschaulichen die erfindungsgemäß wichtigsten Bauelemente und die einzelnen Montagephasen eines fünften Ausführungsbeispiels der Steckverbindung. Das fünfte Ausführungsbeispiel der erfindungsgemäßen Steckverbindung ist den ersten drei Ausführungsbeispielen ähnlich. In seinem grundsätzlichen Aufbau kommt es dem dritten Ausführungsbeispiel nahe, insofern das Sperrmittel direkt mit dem Gehäuse 2 zusammenwirkt. Den ersten beiden Ausführungsbeispielen gleicht es durch ein zusätzliches Sperrelement 9c. Ein wesentlicher Unterschied zu den anderen Ausführungen besteht jedoch darin, daß das erfindungsgemäße Sperrmittel zwar ein mit dem Gehäuse 2 zusammenwirkendes Riegelteil (Sperrelement 9c) aufweist, dieses jedoch nicht am Halteelement 7 sondern am Steckerschaft 5 vorgesehen ist. Es handelt sich damit bei dem Sperrmittel um eine starre Sperre, die den Stecker 3 in seiner Arretierposition gegen eine Verschiebung in Einführungsrichtung E formschlüssig sichert.

Das Sperrelement 9c ist vorzugsweise ein Kunststoffkörper, der ringförmig ausgebildet und an einer Stelle seines Umfanges durch einen axial durchgehenden Schlitz unterbrochen ist, wodurch das Sperrelement 9c radialelastisch verformbar ist. Das Sperrelement 9c wird, wie Fig. 14 zeigt, in eine Nut 47 am äußeren Umfang des Steckerschaftes 5 derart eingebracht, daß sein Innendurchmesser zum Grund der Nut 47 ein Spiel aufweist.

Die Aufnahmeöffnung 4 des Gehäuses 2 besitzt in Einführungsrichtung E des Steckers 3 eine konisch zulaufende Kontur 48, wobei ihr Innendurchmesser eingangsseitig größer als der Außendurchmesser des Sperrelementes 9c ist, sich jedoch dann derartig verringert, daß das Sperrelement 9c beim Einführen des Steckers 3 in die Aufnahmeöffnung 4 radial zusammengepreßt wird (Fig. 15). An der Innenwand des Gehäuses 2 befindet sich eine Ausnehmung 49, die einen Absatz 50 für den Anschlag des Sperrelementes 9c bildet und schmaler als die Ringbreite des Sperrelementes 9c, vorzugsweise etwa halb so breit, ist.

Wie Fig. 15 weiterhin zeigt, wird die Ausnehmung 49 zunächst durch einen gegen den Umfang der Aufnahmeöffnung 4 vorgespannten Sprengring 51 ausgefüllt. Der Sprengring 51 besitzt eine innere Schrägfläche 52, die mit der konisch zulaufenden Kontur 48 des Gehäuses 2 bündig abschließt und derart eine Gleitfläche für das Sperrelement 9c bildet. Der Sprengring 51 besitzt außerdem im Bereich des durch die Ausnehmung 49 gebildeten Absatzes 50 eine radial einwärts gerichtete, von der Wand des Gehäuses 2 abstehende Kante 53.

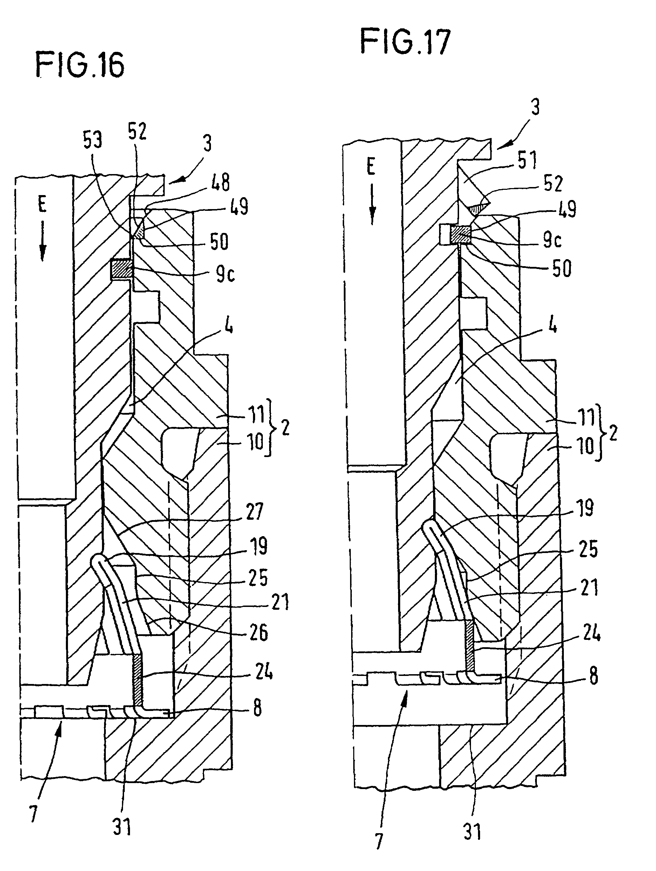

Beim Einführen des Steckers 3 in seine Steckposition passiert das Sperrelement 9c in Einführungsrichtung E unter Verringerung seines Durchmessers zunächst die durch die konische Kontur 48 des Gehäuses und die Schrägfläche 52 des Sprengrings 51 gebildete Gleitfläche. Wenn der Stecker 3 in seine Steckposition gelangt ist (Fig. 16), wird er entgegen der Einführungsrichtung E zurückgeführt. Das Sperrelement 9c erfaßt dabei die vorspringende Kante 53, entfernt den Sprengring 51 aus der Ausnehmung 49 und nimmt, wie Fig. 17 zeigt, unter radialer Aufweitung den Platz des Sprengrings 51 in der Ausnehmung 49 ein. Auf diese Weise schlägt das Sperrelement 9c in Einführungsrichtung E des Steckers 3 an dem Absatz 50 der Ausnehmung 49 an, wobei ein Teil des Sperrelementes 9c in der Nut 47 des Steckerschaftes 5 verbleibt. Der Stecker 3 kann auf diese Weise in seiner Einführungsrichtung E nicht mehr relativ zum Gehäuse 2 verschoben werden. Die in der zweiten Raststellung gesicherte Verbindung zwischen Stecker 3 und Gehäuse 2, bzw. dessen Einsatzteil 11, ist nicht lösbar.

Der Abstand der im Stecker 3 befindlichen Außenringnut 20 für das Halteelement 7 von der Nut 47 zur Aufnahme des Sperrelementes 9c sowie der Abstand der Verengung 27 in der Aufnahmeöffnung 4 des Gehäuses 2 von der Ausnehmung 49 in der Wand des Gehäuses 2 sind so bemessen, daß der Stecker 3 gerade dann in seine Arretierposition gelangt, wenn das Sperrelement seinen Platz in der Ausnehmung 49 im Gehäuse 2 einnimmt.

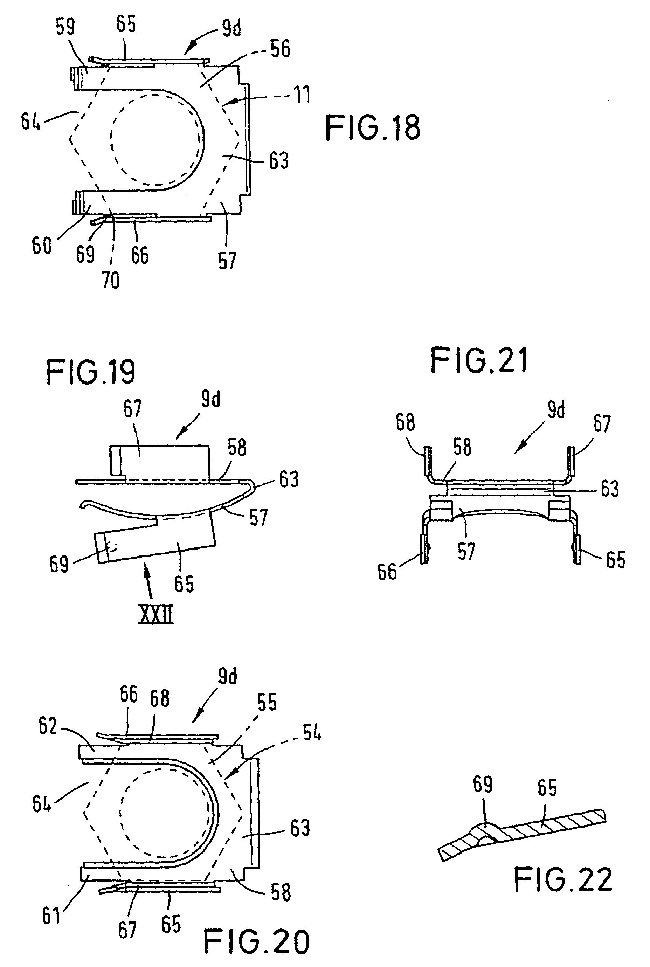

Die Fig. 18 bis 23 der Zeichnung beziehen sich auf ein sechstes Ausführungsbeispiel der Erfindung. In den Figuren ist in verschiedenen Ansichten ein Sperrelement 9d einer erfindungsgemäßen Steckvorrichtung dargestellt. Zur Beschreibung des Einbauzustandes dieses als Klammer ausgebildeten Sperrelementes 9d wird nachfolgend zudem auf Fig. 1 Bezug genommen.

Im Gegensatz zu den vorangegangenen Beispielen befindet sich das Sperrelement 9d bestimmungsgemäß, zwar wie im fünften Ausführungsbeispiel am Stecker 3, aber vorteilhafterweise nicht in der Aufnahmeöffnung 4 des Gehäuses 2, sondern außerhalb des Gehäuses 2. Die Montage wird dadurch weiter vereinfacht. Ein Montageschritt, wie beispielsweise das oben beschriebene Zusammenfügen eines Sperrelementes 9a, 9b mit dem Halteelement 8, ist nicht notwendig.

Der in Fig. 1, aber auch in den Fig. 7 bis 16, dargestellte Stecker 3 besitzt einen bei den gattungsgemäßen Steckverbindungen üblicherweise vorhandenen Bund 54. Wie Fig. 1 weiterhin zeigt, kann das Basissteil 10 des Gehäuses 2 aus dem Boden einer Druckmittel-Vorrichtung bestehen und das im Basisteil 10 lösbar befestigbare Einsatzteil 11 eine in das Bodenloch der Druckmittel-Vorrichtung einschraubbare Überwurfschraube sein.

Das erfindungsgemäße, mit dem Gehäuse 2 in axialer Richtung des Steckers 3 zusammenwirkende Sperrmittel 55, 9d, 56, mit dem der Stecker 3 gegen eine Verschiebung in seine Einführungsrichtung E sicherbar ist und welches erst nach der Einnahme der Arretierposition durch den Stecker 3 wirksam wird, umfaßt in dieser Ausführung der Erfindung ein Sperrelement 9d, welches zwischen eine Anlagefläche 55 des Steckers 3, vorzugsweise des an ihm vorhandenen Bundes 54, und eine Anlagefläche 56 des Gehäuses 2, vorzugsweise seines Einsatzteiles 11 (der Überwurfschraube) klemmbar ist. Das Sperrelement 9d wird, nachdem der Stecker 3 entgegen seiner Einführungsrichtung E aus der Steckposition in die Arretierposition bewegt wurde, zwischen den Bund 54 des Steckers 3 und das Einsatzteil 11 plaziert. Das Sperrelement 9d wirkt als Distanzhalter zwischen Steckerbund 54 und Einsatzteil 11, wodurch eine formschlüssig wirkende Sperre entsteht, die bis zu einer von Material und konstruktiver Ausführung des Sperrelementes 9d abhängigen Grenzlast starr ist. Das Spiel zwischen Stecker 3 und Gehäuse 2 ist damit gleich Null. Oberhalb der Grenzbelastung nimmt das Spiel mit steigender Last zu.

Das Sperrelement 9d besitzt, betrachtet in seiner Unteransicht (Fig. 18) bzw. in seiner Draufsicht (Fig. 20) eine im wesentlichen U-förmige Gestalt. Wie insbesondere die Vorderansicht des Sperrelementes (Fig.19) zeigt, ist diese U-Gestalt doppellagig 57, 58 ausgebildet. Eine U-förmige Lage 57 kommt bestimmungsgemäß bei Vorliegen der Arretierposition des Steckers 3 am Einsatzteil 11 des Gehäuses 2, und zwar an dessen Anlagefläche 56 zur Anlage. Das Einsatzteil 11 des Gehäuses 2 ist in Fig. 18 in Strichlinien andeutungsweise ausgeführt. Die andere U-förmige Lage 58 kommt bestimmungsgemäß bei Vorliegen der Arretierposition des Steckers 3 am Steckerbund 54, und zwar an dessen Anlagefläche 55, zur Anlage. Der Bund 54 des Steckers 3 ist in Fig. 20 in Strichlinien andeutungsweise ausgeführt. Wie in Fig. 1 weisen in Fig. 18 und 20 das Einsatzteil 11 und der Steckerbund 54 zum Verschrauben mit einem Schraubenschlüssel eine Sechskant-Kontur auf, wobei die Schlüsselweite des Einsatzteiles 11 des Gehäuses geringfügig größer als die Schlüsselweite des Steckerbundes 54 ist.

Die gehäuseseitige U-Lage 57 bzw. die steckerseitige U-Lage 58 des Sperrelementes 9d weisen jeweils zwei Schenkel 59, 60 bzw. 61, 62 auf, die durch einen Quersteg 63 verbunden sind, welcher gleichzeitig, wie insbesondere die Vorderansicht (Fig. 19) und die Seitenansicht (Fig. 21) des Sperrelementes 9d zeigen, auch die beiden U-Lagen 57, 58 miteinander verbindet. Zwischen den Schenkeln 59, 60 bzw. 61, 62 befindet sich jeweils eine Öffnung 64, deren Öffnungsweite etwa dem äußeren Durchmesser des Steckerschaftes 5 entspricht.

Wie insbesondere Fig. 19 zeigt, ist eine der beiden U-Lagen, im vorliegenden Fall die gehäuseseitige U-Lage 57, gewölbt ausgeführt, so daß das Sperrelement 9d einerseits einfach zwischen das Gehäuseteil 11 und den Steckerbund 54 eingeführt werden kann, andererseits aber auch als wirksamer Distanzhalter zwischen den Anlageflächen 55, 56 am Gehäuse 2 und am Stecker 3 fungieren kann.

Insbesondere Fig. 21 zeigt, daß rechtwinklig zu den beiden U-lagen 57, 58 des Sperrelementes 9d an den Außenseiten der Schenkel 59, 60, 61, 62 als Verdrehsicherung für das Sperrelement 9d Laschen 65, 66, 67, 68 vorgesehen sind, deren jeweiliger gegenseitiger Abstand der Schlüsselweite des Gehäuseeinsatzteiles 11 bzw. des Steckerbundes 54 entspricht.

Zur Unterstützung des Halts des Sperrelementes 9d am Einsatzteil 11 des Gehäuses 2 bzw. am Bund 54 des Steckers 3 kann an den Laschen 65, 66, 67, 68 jeweils eine Rastwölbung 69 vorgesehen sein. Eine solche Rastwölbung 69 ist als Einzelheit im Schnitt in Fig. 22 dargestellt. Wie Fig. 18 zeigt, vergrößern die Rastwölbungen 69 den Halt des Sperrelementes 9d, indem sie, wenn das Sperrelement 9d bestimmungsgemäß montiert ist, jeweils quer zur Ebene der jeweiligen Lasche 65, 66, 67, 68 hinter eine Anlagekante 70 des Gehäuseeinsatzteils 11 bzw. des Steckerbundes 54 zu liegen kommen.

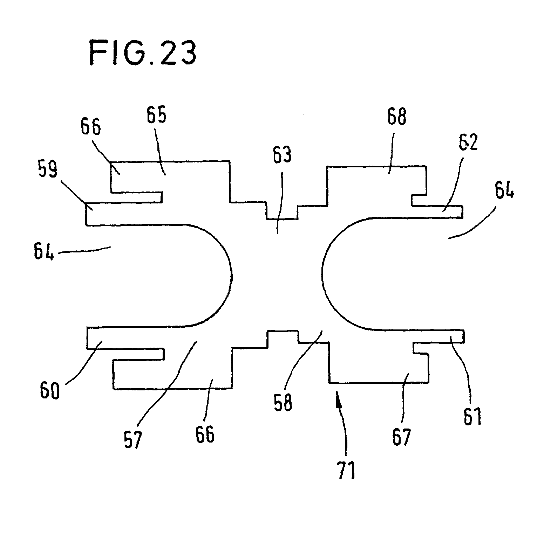

Das erfindungsgemäße Sperrelement 9d ist in einfacher Weise vorzugsweise als Biegeformteil aus Blech herstellbar. Fig. 23 zeigt einen entsprechenden Zuschnitt 71 zur Herstellung des in den Fig. 18 bis 22 dargestellten Sperrelementes 9d. In der zeichnerischen Darstellung des beispielsweise als Stanzteil ausgebildeten Zuschnitts 71 sind die entsprechenden Blechabschnitte mit denselben Bezugszeichen versehen wie die Teile des fertigen Sperrelementes 9d in den Fig. 18 bis 22. Wie die Darstellung zeigt, ist der Fertigungsaufwand bei jedoch vergleichsweise kürzerer Montagezeit nicht größer als für ein Sperrelement 9a gemäß dem ersten Ausführungsbeispiel der Erfindung. Ein Lösen des Sperrelementes 9d ist aufgrund seiner guten Zugänglichkeit an der Steckverbindung leicht möglich.

## Patentansprüche

1. Steckverbindung für Druckmittelleitungen (1), mit einem Gehäuse (2) und mit einem Stecker (3), wobei der Stecker (3) mit einem Steckerschaft (5) in eine Steckposition in eine Aufnahmeöffnung (4) des Gehäuses (2) einführbar, in der Steckposition mit einem Halteelement (7) verbindbar und zusammen mit dem Halteelement (7) entgegen der Einführungsrichtung (E) in eine Arretierposition führbar ist, in welcher der Stecker (3) mittels des Halteelementes (7) gegen eine Verschiebung entgegen seiner Einführungsrichtung (E) fixierbar ist,
**dadurch gekennzeichnet, daß** der Stecker (3) in seiner Arretierposition mittels eines mit dem Gehäuse (2) in axialer Richtung des Steckers (3) zusammenwirkenden Sperrmittels (8, 9a; 8, 9b; 34, 35; 36; 47, 9c, 50; 55, 9d, 56) gegen eine Verschiebung in Einführungsrichtung (E) des Steckers (3) sicherbar ist, wobei das Sperrmittel (8, 9a; 8, 9b; 34, 35; 36; 47, 9c, 50; 55, 9d, 56) einen derartigen Aufbau und eine derartige Anordnung besitzt, daß das Sperrmittel (8, 9a; 8, 9b; 34, 35; 36; 47, 9c, 50; 55, 9d, 56) erst wirksam wird, nachdem der Stecker (3) mit dem Steckerschaft (5) in die Steckposition in der Aufnahmeöffnung (4) des Gehäuses (2) eingeführt, in der Steckposition mit dem Halteelement (7) verbunden und zusammen mit dem Halteelement (7) entgegen der Einführungsrichtung (E) in die Arretierposition geführt worden ist.

2. Steckverbindung nach Anspruch 1,
**dadurch gekennzeichnet, daß** das Gehäuse (2) aus einem Basisteil (10) und aus einem darin lösbar befestigbaren Einsatzteil (11) aufgebaut ist.

3. Steckverbindung nach Anspruch 1 oder 2,
**dadurch gekennzeichnet, daß** das Halteelement (7) zumindest abschnittsweise ringförmig und radialelastisch ausgebildet ist,mindestens an einem Ende nach außen weisende Ansätze (8) besitzt und an einer Stelle seines Umfanges durch einen axial durchgehenden Schlitz unterbrochen ist.

4. Steckverbindung nach Anspruch 3,
**dadurch gekennzeichnet, daß** das Halteelement (7) als Blechformteil mit einem umgebördelten Arretierringabschnitt (19) zum Eingreifen in eine Außenringnut (20) des Steckerschaftes (5) sowie mit einem sich in Einführungsrichtung (E) an den Arretierringabschnitt (19) anschließenden und im wesentlichen konisch erweiternden Ringabschnitt (21) ausgebildet ist, wobei der Arretierringabschnitt (19) dadurch radialelastisch verformbar ist, daß er durch über den Ringumfang verteilt angeordnete, sich in axialer Richtung in den konischen Ringabschnitt (21) erstreckende Schlitze (22) in Ringsektoren (23) unterteilt ist und daß zwischen dem konischen Ringabschnitt (21) und den Ansätzen (8) ein ringförmiger, insbesondere im wesentlichen zylindrischer Übergangsabschnitt (24) angeordnet ist.

5. Steckverbindung nach Anspruch 4,
**dadurch gekennzeichnet, daß** die Aufnahmeöffnung (4) des Gehäuses (2) etwa in ihrem mittleren Bereich eine Innenkontur mit einem Ringanlagebereich (25) für den etwa axialmittigen Bereich des Halteelementes (7), mit einer Erweiterung (26) für den Endbereich des konischen Ringabschnittes (21) und mit einer Verengung (27) zum Eindrücken des Arretierringabschnittes (19) in die Außenringnut (20) des Steckerschaftes (5) aufweist.

6. Steckverbindung nach einem oder mehreren der Ansprüche 1 bis 5,
**dadurch gekennzeichnet, daß** das Sperrmittel (8, 9a; 8, 9b; 34, 35; 36; 47, 9c, 50; 55, 9d, 56) eine starre Sperre ist.

7. Steckverbindung nach einem oder mehreren der Ansprüche 1 bis 6,
**dadurch gekennzeichnet, daß** der Stecker (3) in seiner Arretierposition mittels des mit dem Gehäuse (2) in axialer Richtung des Steckers (3) zusammenwirkenden Sperrmittels (8, 9a; 8, 9b; 34, 35; 47, 9c, 50; 55, 9d, 56) gegen eine Verschiebung in Einführungsrichtung (E) formschlüssig sicherbar ist.

8. Steckverbindung nach einem oder mehreren der Ansprüche 3 bis 7,
**dadurch gekennzeichnet, daß** mindestens ein am Halteelement (7) ausgebildetes Riegelteil (8, 34) Bestandteil des Sperrmittels (8, 9; 34, 35) ist, wobei das Riegelteil (8, 34) durch mindestens einen radial nach außen weisenden Ansatz (8, 34) des Halteelementes (7) gebildet ist.

9. Steckverbindung nach einem oder mehreren der Ansprüche 1 bis 8,
**dadurch gekennzeichnet, daß** ein zusätzliches Sperrelement (9a, 9b, 9c) Bestandteil der Sperrmittels (8, 9a; 8, 9b; 47, 9c, 50; 55, 9d, 56) ist.

10. Steckverbindung nach Anspruch 9,
**dadurch gekennzeichnet, daß** das Sperrelement (9a, 9b, 9c) ringförmig ausgebildet ist und an einer Stelle seines Umfanges durch einen axial durchgehenden Schlitz (16) unterbrochen ist, wodurch das Sperrelement (9a, 9b, 9c) radialelastisch verformbar ist.

11. Steckverbindung nach Anspruch 9 oder 10,
**dadurch gekennzeichnet, daß** das Sperrelement (9a, 9b) mindestens eine Anlagefläche (17) für das Halteelement (7) aufweist.

12. Steckverbindung nach einem oder mehreren der Ansprüche 9 bis 11,
**dadurch gekennzeichnet, daß** das Halteelement (7) und das Sperrelement (9a, 9b) über eine lösbare kraftschlüssige Verbindung (8, 15; 24, 33) zusammenfügbar sind.

13. Steckverbindung nach einem oder mehreren der Ansprüche 9 bis 12,
**dadurch gekennzeichnet, daß** das Sperrelement (9a) mindestens ein Distanzstück (12) aufweist, mit dem es im Montagezustand zwischen dem Basisteil (10) und dem Einsatzteil (11) gehalten ist.

14. Steckverbindung nach einem oder mehreren der Ansprüche 9 bis 13,
**dadurch gekennzeichnet, daß** die radial nach außen weisende Ansätze (8) des das Halteelementes (7) bei Vorliegen der Arretierposition des Steckers (3) am Sperrelement (9a, 9b) anliegen.

15. Steckverbindung nach einem oder mehreren der Ansprüche 9 bis 14,
**dadurch gekennzeichnet, daß** das Sperrelement (9a) quer zur Einführungsrichtung (E) des Steckers (3) federnden Haken (15) aufweist, welche durch aus der Mantelfläche des ringförmigen Sperrelementes (9a) freigeschnittene, spitzwinklig radial einwärts gebogene Stege gebildet sind.

16. Steckverbindung nach Anspruch 15,
**dadurch gekennzeichnet, daß** das Gesamtmaß aus der durch die Einzelabmessungen des Arretierringabschnittes (19), des konischen Ringabschnittes (21) und des Übergangsabschnittes (24) bestimmten Ringhöhe des Halteelementes (7) sowie aus der Höhe der Haken (15) des Sperrelementes (9a) dem Gesamtmaß aus der Länge des Ringanlagebereiches (25), der Erweiterung (26) und der Verengung (27) der Aufnahmeöffnung (4) des Gehäuses (2) entspricht.

17. Steckverbindung nach einem oder mehreren der Ansprüche 9 bis 16,
**dadurch gekennzeichnet, daß** das Sperrelement (9b) einen innenliegenden Federring (28) aufweist.

18. Steckverbindung nach einem oder mehreren der Ansprüche 1 bis 17,
**dadurch gekennzeichnet, daß** das Gehäuse (2) in der Innenkontur der Aufnahmeöffnung (4) eine sich in Einführungsrichtung (E) des Steckers (3) an die Erweiterung (26) anschließende Stufe (29), einen sich von der Stufe (29) ausgehend konisch verengenden Abschnitt (30) und eine endseitige Schulter (31) aufweist.

19. Steckverbindung nach Anspruch 18,
**dadurch gekennzeichnet, daß** das Sperrelement (9b) einen gestuften Außendurchmesser (32, 33) besitzt, wobei die innenliegende Stufe (32) etwa dem Durchmesser des zylindrischen Übergangsabschnittes (24) des Halteelementes (7) und die außenliegende Stufe (33) etwa dem maximalen Durchmesser der Erweiterung (26) in der Innenkontur des Gehäuses (2) entspricht und die außenliegende Stufe (33) des radialelastisch deformierten Sperrelementes (9b) dem Durchmesser des zylindrischen Übergangsabschnittes (24) des Halteelementes (7) sowie gleichzeitig einem Durchmesser des Gehäuses (2) im Bereich des sich konisch verengenden Abschnittes (30) zwischen der sich an die Erweiterung (26) anschließende Stufe (29) und der endseitigen Schulter (31) entspricht.

20. Steckverbindung nach einem oder mehreren der Ansprüche 9 bis 19,
**dadurch gekennzeichnet, daß** das Gesamtmaß aus der durch die Einzelabmessungen des Arretierringabschnittes (19), des konischen Ringabschnittes (21) und des Übergangsabschnittes (24) bestimmten Ringhöhe des Halteelementes (7) sowie aus der Höhe des Sperrelementes (9b) dem Gesamtmaß aus der Länge des Ringanlagebereiches (25), der Erweiterung (26) und der Verengung (27) der Aufnahmeöffnung (4) des Gehäuses (2) entspricht.

21. Steckverbindung nach einem oder mehreren der Ansprüche 5 bis 8,
**dadurch gekennzeichnet, daß** das Halteelement (7) im mittleren Bereich mindestens einen nach außen weisenden Ansatz (34) besitzt und die Aufnahmeöffnung (4) des Gehäuses (2) im Bereich der Erweiterung (26) ihrer Innenkontur mindestens eine über mindestens einen Teil ihres Umfanges verlaufende nutartige Vertiefung (35) aufweist.

22. Steckverbindung nach einem oder mehreren der Ansprüche 1 bis 6,
**dadurch gekennzeichnet, daß** das Sperrmittel (36) im Bereich zwischen dem Steckerschaft (5) und der Aufnahmeöffnung (4) des Gehäuses (2) durch eine Druckmittelkammer (36) derart gebildet ist, daß bei Druckbeaufschlagung der gesteckten und arretierten Verbindung in der Druckmittelkammer (36) ein den Stecker (3) entgegen seiner Einsteckrichtung (E) mit einer Vorspannkraft (F) beaufschlagendes Druckpolster (p) aufgebaut wird.

23. Steckverbindung nach Anspruch 22,
**dadurch gekennzeichnet, daß** die Druckmittelkammer (36) als Ringkammer radial zwischen einem über eine Stufe (37) im Durchmesser reduzierten Abschnitt (38) des Steckerschaftes (5) und einem über eine Stufe (39) im Durchmesser erweiterten Abschnitt (40) der Aufnahmeöffnung (4) angeordnet ist, wobei die Stufe (37) des Steckerschaftes (5) auf der entgegen der Einführungsrichtung (E) des Steckers (3) weisenden Seite und die Stufe (39) der Aufnahmeöffnung (4) auf der in Einführungsrichtung (E) weisenden Seite der Druckmittelkammer (36) angeordnet sind.

24. Steckverbindung nach Anspruch 22 oder 23,
**dadurch gekennzeichnet, daß** die Druckmittelkammer (36) auf ihrer entgegen der Einführungsrichtung (E) des Steckers (3) weisenden Seite durch eine Umfangsdichtung (6) sowie auf ihrer in Einführungsrichtung (E) weisenden Seite durch eine derart rückschlagventilartig ausgebildete Ringdichtung (41) abgedichtet ist, daß bei Druckbeaufschlagung Druckmittel über die Ringdichtung (41) in die Druckmittelkammer (36) gelangt und dort als Druckpolster (p) gehalten wird, wobei die - insbesondere auf der Stufe (39) der Aufnahmeöffnung (4) abgestützte - Ringdichtung (41) eine ringförmige, schräg entgegen der Einführungsrichtung (E) des Steckers (3) ausgerichtete, als Rückschlagventilelement fungierende Dichtlippe (44) aufweist.

25. Steckverbindung nach einem oder mehreren der Ansprüche 22 bis 24,
**dadurch gekennzeichnet, daß** die Umfangsdichtung (6) - vorzugsweise in Kombination mit einem Stützring (45) - in einer Innenringnut (42) der Aufnahmeöffnung (4) des Gehäuses (2) gelagert ist und dichtend auf den Steckerschaft (5) wirkt.

26. Steckverbindung nach einem oder mehreren der Ansprüche 1 bis 10,
**dadurch gekennzeichnet, daß** das Sperrmittel (47, 9c, 50) mindestens ein Sperrelement (9c) aufweist, das sich bei Vorliegen der Arretierposition des Steckers (3) teilweise in einer Nut (47) am äußeren Umfang des Steckerschaftes (5) und teilweise in einer Ausnehmung (49) in der Wand der Aufnahmeöffnung (4) des Gehäuses (2) befindet, wobei die Ausnehmung (49) einen Absatz (50) für den Anschlag des Sperrelementes (9c) in Einführungsrichtung (E) des Steckers (3) bildet.

27. Steckverbindung nach Anspruch 26,
**gekennzeichnet durch** eine konisch in Einführungsrichtung (E) des Steckers (3) zulaufende Kontur (48) in der Aufnahmeöffnung (4) des Gehäuses (2), wobei der Innendurchmesser der Kontur (48) eingangsseitig größer als der Außendurchmesser des Sperrelementes (9c) ist und sich derart verringert, daß das Sperrelement (9c) beim Einführen des Steckers (3) in die Aufnahmeöffnung (4) radial zusammengepreßt wird, und wobei sich die Ausnehmung (49) im Bereich der konisch zulaufenden Kontur (48) befindet, und **durch** einen gegen den Umfang der Aufnahmeöffnung (4) vorgespannten entfernbaren Sprengring (51) mit einer radial einwärts gerichteten Schrägfläche (52), die mit der konisch zulaufenden Kontur (48) bündig abschließt, und mit einer radial einwärts gerichteten, von der Wand des Gehäuses (2) im Bereich des **durch** die Ausnehmung (49) gebildeten Absatzes (50) abstehenden Kante (53).

28. Steckverbindung nach einem oder mehreren der Ansprüche 1 bis 9,
**dadurch gekennzeichnet, daß** das Sperrmittel (55, 9d, 56) außerhalb der Aufnahmeöffnung (4) des Gehäuses (2) angeordnet ist.

29. Steckverbindung nach Anspruch 28,
**dadurch gekennzeichnet, daß** das Sperrmittel (55, 9d, 56) ein Sperrelement (9d) umfaßt, welches zwischen eine Anlagefläche (55) des Steckers (3), vorzugsweise eines am Stecker (3) befindlichen Bundes (54), und eine Anlagefläche (56) des Gehäuses (2), vorzugsweise seines Einsatzteiles (11) klemmbar ist.

30. Steckverbindung nach Anspruch 29,
**dadurch gekennzeichnet, daß** das Sperrelement (9d) durch zwei über einen Quersteg (63) verbundene U-förmige Lagen (57, 58) gebildet ist, wobei bei Vorliegen der Arretierposition des Steckers (3) eine U-förmige Lage (57) an der Anlagefläche (56) des Gehäuses (2) und die andere der U-förmige Lage (58) an der Anlagefläche (55) des Steckers (3) zur Anlage kommt und der Quersteg (63) gleichzeitig die U-Schenkel (59, 60, 61, 62) der U-förmigen Lagen (57, 58) miteinander verbindet.

31. Steckverbindung nach Anspruch 30,
**dadurch gekennzeichnet, daß** das Sperrelement (9d) rechtwinklig zu den U-förmigen Lagen (57, 58) an den Außenseiten der Schenkel (59, 60, 61, 62) als Verdrehsicherung für das Sperrelement (9d) wirkende Laschen (65, 66, 67, 68) mit vorzugsweise darauf befindlichen Rastwölbungen (69) aufweist.

## Claims

1. Plug-in connection for pressure-medium lines (1), having a housing (2) and having a plug (3), it being possible for the plug (3) to be inserted with a plug shank (5) into a plugged-in position in a receiving opening (4) in the housing (2), to be connected to a retaining element (7) in the plugged-in position and, together with the retaining element (7) to be guided counter to the insertion direction (E) into a locking position, in which the plug (3) can be fixed against a displacement counter to its insertion direction (E) by means of the retaining element (7), **characterized in that** in its locking position, the plug (3) can be secured against displacement in the insertion direction (E) of the plug (3) by means of a blocking means (8, 9a; 8, 9b; 34, 35; 36; 47, 9c, 50; 55, 9d, 56) interacting with the housing (2) in the axial direction of the plug (3), the blocking means (8, 9a; 8, 9b; 34, 35; 36; 47, 9c, 50; 55, 9d, 56) having a construction and an arrangement such that the blocking means (8, 9a; 8, 9b; 34, 35; 36; 47, 9c, 50; 55, 9d, 56) becomes effective only after the plug (3) has been introduced with the plug shank (5) into the plugged-in position in the receiving opening (4) in the housing (2), connected to the retaining element (7) in the plugged-in position and, together with the retaining element (7), has been guided counter to the insertion direction (E) into the locking position.

2. Plug-in connection according to Claim 1, **characterized in that** the housing (2) is built up from a base part (10) and an insert part (11) which can be fixed detachably therein.

3. Plug-in connection according to Claim 1 or 2, **characterized in that** the retaining element (7) is designed to be annular and radially resilient, at least in some sections, has attachments (8) pointing outwards at least at one end and, at one point on its circumference, is interrupted by a slot passing through axially.

4. Plug-in connection according to Claim 3, **characterized in that** the retaining element (7) is designed as a sheet-metal moulding with a flanged-over locking ring section (19) for engaging in an outer annular groove (20) in the plug shank (5), and with a ring section (21) which adjoins the locking ring section (19) in the insertion direction (E) and widens substantially conically, the locking ring section (19) being capable of being resiliently deformed radially by being subdivided into ring sectors (23) by slots (22) which are distributed over the circumference of the ring and extend in the axial direction into the conical ring section (21), and **in that** an annular, in particular substantially cylindrical transition section (24) is arranged between the conical ring section (21) and the attachments (8).

5. Plug-in connection according to Claim 4, **characterized in that** the receiving opening (4) in the housing (2) has, approximately in its central region, an inner contour with a ring contact regicn (25) for the approximately axially central region or the regaining element (7), with a widening (26) for the end region of the conical ring section (21) and with a narrowing (27) for pressing the locking ring section (19) into the outer annular groove (20) in the plug shank (5).

6. Plug-in connection according to one or more of Claims 1 to 5, **characterized in that** the blocking means (8, 9a; 8, 9b; 34, 35; 36; 47, 9c, 50; 55, 9d, 56) is a rigid block.

7. Plug-in connection according to one or more of Claims 1 to 6, **characterized in that** in its locking position, the plug (3) can be secured against displacement in the insertion direction (E) with a form fit by means of the blocking means (8, 9a; 8, 9b; 34, 35; 36; 47, 9c, 50; 55, 9d, 56) interacting with the housing (2) in the axial direction of the plug (3).

8. Plug-in connection according to one or more of Claims 3 to 7, **characterized in that** at least one bolt part (8, 34) formed on the retaining element (7) is a constituent part of the blocking means (8, 9; 34, 35), the bolt part (8, 34) being formed by at least one attachment (8, 34) pointing radially outwards on the retaining element (7).

9. Plug-in connection according to one or more of Claims 1 to 8, **characterized in that** an additional blocking element (9a, 9b, 9c) is a constituent part of the blocking means (8, 9a; 8, 9b; 47, 9c, 50; 55, 9d, 56).

10. Plug-in connection according to Claim 9, **characterized in that** the blocking element (9a, 9b, 9c) is of ring-like design and, at one point on its circumference, is interrupted by a slot (16) passing through axially, by which means the blocking element (9a, 9b, 9c) can be resiliently deformed radially.

11. Plug-in connection according to Claim 9 or 10, **characterized in that** the blocking element (9a, 9b) has at least one contact face (17) for the retaining element (7).

12. Plug-in connection according to one or more of Claims 9 to 11, **characterized in that** the retaining element (7) and the blocking element (9a, 9b) can be joined by a detachable, form-fitting connection (8, 15; 24, 33).

13. Plug-in connection according to one or more of Claims 9 to 12, **characterized in that** the blocking element (9a) has at least one spacer (12), with which, in the assembled state, it is retained between the base part (10) and the insert part (11).

14. Plug-in connection according to one or more of Claims 9 to 13, **characterized in that** the attachments (8) pointing radially outwards on the retaining element (7) rest or. the blocking element (9a, 9b) in the presence of the locking position of the plug (3).

15. Plug-in connection according to one or more of Claims 9 to 14, **characterized in that** the blocking element (9a) has hooks (15) which spring transversely with respect to the insertion direction (E) of the plug (3) and which are formed by webs cut free from the outer surface of the annular blocking element (9a) and bent radially inwards at an acute angle.

16. Plug-in connection according to Claim 15, **characterized in that** the overall dimension of the annular height of the retaining element (7), determined by the individual dimensions of the locking ring section (19), the conical ring section (21) and the transition section (24), and also of the height of the hooks (15) of the blocking element (9a), corresponds to the overall dimension of the length of the ring contact region (25), the widening (26) and the narrowing (27) of the receiving opening (4) in the housing (2).

17. Plug-in connection according to one or more of Claims 9 to 16, **characterized in that** the blocking element (9b) is a spring ring (28) on the inside.

18. Plug-in connection according to one or more of Claims 1 to 17, **characterized in that** in the inner contour of the receiving opening (4), the housing (2) has a step (29) which adjoins the widening (26) in the insertion direction (E) of the plug (3), a section (30) that goes out from the step (29) and narrows conically, and a shoulder (31) at the end.

19. Plug-in connection according to Claim 18, **characterized in that** the blocking element (9b) has a stepped outer diameter (32, 33), the inner step (32) corresponding approximately to the diameter of the cylindrical transition section (24) of the retaining element (7), and the outer step (33) corresponding approximately to the maximum diameter of the widening (26) in the inner contour of the housing (2), and the outer step (33) of the radially resiliently deformed blocking element (9b) corresponding to the diameter of the cylindrical transition section (24) of the retaining element (7) and, at the same time, to a diameter of the housing (2) in the region of the conically narrowing section (30) between the step (29) that adjoins the widening (26) and the shoulder (31) at the end.

20. Plug-in connection according to one or more of Claims 9 to 19, **characterized in that** the overall dimension of the annular height of the retaining element (7), determined by the individual dimensions of the locking ring section (19), the conical ring section (21) and the transition section (24), and also by the height of the blocking element (9b) corresponds to the overall dimension of the length of the ring contact region (25), the widening (26) and the narrowing (27) of the receiving opening (4) in the housing (2).

21. Plug-in connection according to one or more of Claims 5 to 8, **characterized in that** in the central region, the retaining element (7) has at least one attachment (34) pointing outwards, and, in the region of the widening (26) of its inner contour, the receiving opening (4) in the housing (2) has at least one groove-like depression (35) running over at least part of its circumference.

22. Plug-in connection according to one or more of Claims 1 to 6, **characterized in that** in the region between the plug shank (5) and the receiving opening (4) in the housing (2), the blocking means (36) is formed by a pressure-medium chamber (36) in such a way that when pressure is applied to a plugged and locked connection, a pressure pad (p) that acts on the plug (3) counter to its plug-in direction (E) with a prestressing force (F) is built up in the pressure-medium chamber (36),

23. Plug-in connection according to Claim 22, **characterized in that** the pressure-medium chamber (36) is arranged as an annular chamber radially between a section (38) of the plug shank (5) whose diameter is reduced by a step (37), and a section (40) of the receiving opening (4) whose diameter is widened by a step (39), the step (37) on the plug shank (5) being arranged on the side pointing counter to the insertion direction (E) of the plug (3), and the step (39) on the receiving opening (4) being arranged on the side of the pressure-medium chamber (36) pointing in the insertion direction (E).

24. Plug-in connection according to Claim 22 or 23, **characterized in that** on its side pointing counter to the insertion direction (E) of the plug (3), the pressure-medium chamber (36) is sealed off by a circumferential seal (6), and on its side pointing in the insertion direction (E), the pressure-medium chamber (36) is sealed off by an annular seal (41) designed in the manner of a nonreturn valve in such a way that when pressure is applied, pressure medium passes into the pressure-medium chamber (36) via the annular seal (41) and is retained there as a pressure pad (p), the annular seal (41) - in particular supported on the step (39) of the receiving opening (4) - having an annular sealing lip (44) which is oriented obliquely counter to the insertion direction (E) of the plug (3) and functions as a nonreturn valve element.

25. Plug-in connection according to one or more of Claims 22 to 24, **characterized in that** the circumferential seal (6) - preferably in combination with a supporting ring (45) - is mounted in an inner annular groove (42) in the receiving opening (4) in the housing (2) and acts in a sealing manner on the plug shank (5).

26. Plug-in connection according to one or more of Claims 1 to 10, **characterized in that** the blocking means (47, 9c, 50) has at least one blocking element (9c) which, in the presence of the locking position of the plug (3), is located partly in a groove (47) on the outer circumference of the plug shank (5) and partly in a recess (49) in the wall of the receiving opening (4) in the housing (2), the recess (49) forming a ledge (50) to stop the blocking element (9c) in the insertion direction (E) of the plug (3).

27. Plug-in connection according to Claim 26, **characterized by** a contour (48) in the receiving opening (4) of the housing (2), tapering conically in the insertion direction (E) of the plug (3), the inner diameter of the contour (48) on the inlet side being greater than the outer diameter of the blocking element (9c) and reducing in such a way that when the plug (3) is inserted into the receiving opening (4), the blocking element (9c) is compressed radially, and the recess (49) being located in the region of the conically tapering contour (48), and by a removable spring ring (51) which is prestressed against the circumference of the receiving opening (4) and has a radially inwardly directed oblique face (52) which ends flush with the conically tapering contour (48), and having a radially inwardly directed edge (53) that stands out from the wall of the housing (2) in the region of the ledge (50) formed by the recess (49).

28. Plug-in connection according to one or more of Claims 1 to 9, **characterized in that** the blocking means (55, 9d, 56) is arranged outside the receiving opening (4) in the housing (2).

29. Plug-in connection according to Claim 28, **characterized in that** the blocking means (55, 9d, 56) comprises a blocking element (9d), which can be clamped between a contact face (55) of the plug (3), preferably a collar (54) located on the plug (3), and a contact face (56) on the housing (2), preferably the insert part (11) of the latter.

30. Plug-in connection according to Claim 29, **characterized in that** the blocking element (9d) is formed by two U-shaped layers (57, 58) connected via a transverse web (63), where in the presence of the locking position of the plug (3), a U-shaped layer (57) comes to rest on the contact face (56) of the housing (2) and the other of the U-shaped layer (58) comes to rest on the contact face (55) of the plug (3) and the transverse web (63) at the same time connects the legs (59, 60, 61, 62) of the U-shaped layers (57, 58) to each other.

31. Plug-in connection according to Claim 30, **characterized in that** the blocking element (9d) has lugs (65, 66, 67, 68) with latching bulges (69) preferably located on them on the outer sides of the legs (59, 60, 61, 62) and at right angles to the U-shaped layers (57, 58), acting as an antirotation safeguard for the blocking element (9d).

## Revendications

1. Connexion par enfichage pour conduites (1) d'agents de pression, comprenant un boîtier (2) et une fiche mâle (3), la fiche mâle (3) pouvant être introduite par une tige (5) dans une ouverture de réception (4) du boîtier (2) pour occuper une position d'enfichage, la fiche pouvant être connectée, dans cette position d'enfichage, à un élément de maintien (7) et amenée, ensemble avec l'élément de maintien (7), dans le sens contraire à la direction d'enfichage (E) vers une position d'immobilisation, dans laquelle la fiche mâle (3) peut être immobilisée au moyen de l'élément de maintien (7) pour éviter un déplacement dans le sens contraire de la direction d'enfichage (E),
**caractérisée en ce que**, dans sa position d'immobilisation, la fiche mâle (3) peut être bloquée pour éviter un déplacement dans la direction d'enfichage (E) de la fiche (3), au moyen d'un dispositif de blocage (8, 9a ; 8, 9b ; 34, 35 ; 36 ; 47, 9c, 50 ; 55, 9d, 56) coopérant avec le boîtier (2) dans la direction axiale de la fiche mâle (3), ledit dispositif de blocage (8, 9a ; 8, 9b ; 34, 35 ; 36 ; 47, 9c, 50 ; 55, 9d, 56) étant réalisé et agencé de manière à ce que le dispositif de blocage (8, 9a ; 8, 9b ; 34, 35 ; 36 ; 47, 9c, 50 ; 55, 9d, 56) n'agisse que lorsque la tige (5) de la fiche (3) a été introduite pour occuper la position d'enfichage dans l'ouverture de réception (4) du boîtier (2), que la fiche a été connectée, dans ladite position d'enfichage, à l'élément de maintien (7) et amenée, ensemble avec l'élément de maintien (7), dans le sens contraire à la direction d'enfichage (E) vers la position d'immobilisation.

2. Connexion par enfichage selon la revendication 1,
**caractérisée en ce que** le boîtier (2) comprend une partie de base (10) et une partie insérée (11) pouvant y être fixée de manière amovible.

3. Connexion par enfichage selon la revendication 1 ou 2,
**caractérisée en ce que** l'élément de maintien (7) est, au moins par sections, annulaire et radialement élastique, possède au moins à l'une de ses extrémités des prolongements (8) dirigés vers l'extérieur et qu'il est interrompu, en un point de sa circonférence, par une fente axialement continue.

4. Connexion par enfichage selon la revendication 3,
**caractérisée en ce que** l'élément de maintien (7) a la forme d'une pièce moulée en tôle comprenant une partie d'arrêt rabattue (19) s'engageant dans une rainure annulaire externe (20) de la tige de fiche (5), ainsi qu'une partie annulaire (21) prolongeant la partie annulaire d'arrêt (19) dans la direction d'enfichage (E) et s'évasant sensiblement de manière conique, la partie annulaire d'arrêt (19) étant élastiquement déformable dans la direction radiale du fait qu'elle est partagée en secteurs annulaires (23) grâce à des fentes (22) qui s'étendent dans la direction axiale vers l'intérieur de la partie annulaire conique (21), et qu'entre la partie annulaire conique (21) et les prolongements (8), on a prévu une partie de transition annulaire (24) en particulier sensiblement cylindrique.

5. Connexion par enfichage selon la revendication 4,
**caractérisée en ce que** l'ouverture de réception (4) du boîtier (2) comprend, sensiblement dans sa région centrale, un profil interne muni d'une section annulaire d'appui (25) pour la partie sensiblement axialement centrale de l'élément de maintien (7), présentant un élargissement (26) pour la section terminale de la partie annulaire conique (21) et un rétrécissement (27) pour pousser la partie annulaire d'arrêt (19) dans la rainure annulaire externe (20) de la tige de fiche (5).

6. Connexion par enfichage selon l'une ou plusieurs des revendications 1 à 5,
**caractérisée en ce que** le dispositif de blocage (8, 9a ; 8, 9b ; 34, 35; 36 ; 47, 9c, 50 ; 55, 9d, 56) est un moyen de blocage rigide.

7. Connexion par enfichage selon l'une ou plusieurs des revendications 1 à 6,
**caractérisée en ce que** la fiche mâle (3) peut être bloquée de par sa forme dans sa position d'immobilisation pour empêcher un déplacement dans la direction d'enfichage (E), grâce au dispositif de blocage (8, 9a ; 8, 9b ; 34, 35 ; 47, 9c, 50 ; 55, 9d, 56) qui coopère avec le boîtier (2) dans la direction axiale de la fiche mâle (3).

8. Connexion par enfichage selon l'une ou plusieurs des revendications 3 à 7,
**caractérisée en ce qu'**au moins un moyen de verrouillage (8, 34) prévu sur l'élément de maintien (7) fait partie du dispositif de blocage (8, 9 ; 34, 35), ledit moyen de verrouillage (8, 34) étant formé par au moins un prolongement (8, 34) de l'élément de maintien (7), dirigé vers l'extérieur.

9. Connexion par enfichage selon l'une ou plusieurs des revendications 1 à 8,
**caractérisée en ce qu'**un moyen supplémentaire de verrouillage (9a, 9b, 9c) fait partie du dispositif de blocage (8, 9a ; 8, 9b ; 47, 9c, 50 ; 55, 9d, 56).

10. Connexion par enfichage selon la revendication 9,
**caractérisée en ce que** le moyen de verrouillage (9a, 9b, 9c) est annulaire et est interrompu, en un point de sa circonférence, par une fente (16) continue dans la direction axiale, ce qui permet une déformation élastique dans la direction radiale du moyen de verrouillage (9a, 9b, 9c).

11. Connexion par enfichage selon la revendication 9 ou 10,
**caractérisée en ce que** le moyen de verrouillage (9a, 9b) comprend au moins une surface d'appui (17) pour l'élément de maintien (7).

12. Connexion par enfichage selon l'une ou plusieurs des revendications 9 à 11,
**caractérisée en ce que** l'élément de maintien (7) et l'élément de verrouillage (9a, 9b) peuvent être assemblés au moyen d'une liaison par la force (8, 15 ; 24, 33).

13. Connexion par enfichage selon l'une ou plusieurs des revendications 9 à 12,
**caractérisée en ce que** l'élément de verrouillage (9a) comprend au moins une pièce d'espacement (12), grâce à laquelle il est maintenu, à l'état de montage, entre la partie de base (10) et la partie à insérer (11).

14. Connexion par enfichage selon l'une ou plusieurs des revendications 9 à 13,
**caractérisée en ce que**, dans la position de blocage de la fiche mâle (3), les prolongements (8) dirigés radialement vers l'extérieur de l'élément de maintien (7) sont appliqués sur l'élément de verrouillage (9a, 9b).

15. Connexion par enfichage selon l'une ou plusieurs des revendications 9 à 14,
**caractérisée en ce que** l'élément de verrouillage (9a) présente, transversalement à la direction d'enfichage (E) de la fiche mâle (3), des crochets élastiques (15) formés par des barrettes découpées dans la surface d'enveloppe de l'élément annulaire de verrouillage (9a) et repliées radialement à angle aigu vers l'intérieur.

16. Connexion par enfichage selon la revendication 15,
**caractérisée en ce que** les dimensions totales résultant des mesures individuelles de la partie d'arrêt (19) de la partie annulaire conique (21) et de la partie de transition (24) qui déterminent la hauteur annulaire de l'élément de maintien (7), ainsi que de la hauteur des crochets (15) de l'élément de verrouillage (9a) correspondent aux dimensions totales résultant de la longueur de la région annulaire d'appui (25), de l'élargissement (26) et du rétrécissement (27) de l'ouverture de réception (4) du boîtier (2).

17. Connexion par enfichage selon l'une ou plusieurs des revendications 9 à 16,
**caractérisée en ce que** l'élément de verrouillage (9b) comprend un anneau élastique (28) appliqué intérieurement.

18. Connexion par enfichage selon l'une ou plusieurs des revendications 1 à 17,
**caractérisée en ce que** le boîtier (2) présente, dans le profil interne de l'ouverture de réception (4), un redan (29) prolongeant l'élargissement (26) dans la direction d'enfichage (E) de la fiche mâle (3), une section (30) coniquement rétrécie à partir du redan (29) et un épaulement terminal (31).

19. Connexion par enfichage selon la revendication 18,
**caractérisée en ce que** l'élément de verrouillage (9b) présente un diamètre externe étagé (32, 33), le redan (32) situé à l'intérieur correspondant sensiblement au diamètre de la partie cylindrique de transition (24) de l'élément de maintien (7), et le redan situé à l'extérieur (33) correspondant sensiblement au diamètre maximum de l'élargissement (26) du profil interne du boîtier (2), et le redan (33) situé à l'extérieur de l'élément de verrouillage (9b) déformé élastiquement dans la direction radiale correspondant au diamètre de la partie de transition cylindrique (24) de l'élément de maintien (7), ainsi qu'à un diamètre du boîtier (2) dans la région de la section (30) coniquement rétrécie, mesuré entre le redan (29) prolongeant l'élargissement (26) et l'épaulement terminal (31).

20. Connexion par enfichage selon l'une ou plusieurs des revendications 9 à 19,
**caractérisée en ce que** les dimensions totales résultant des mesures individuelles de la partie de blocage (19), de la partie annulaire conique (21) et de la partie de transition (24) déterminant la hauteur annulaire de l'élément de maintien (7), ainsi que de la hauteur de l'élément de verrouillage (9b) correspondent aux dimensions totales résultant de la longueur de la section annulaire d'appui (25), de l'élargissement (26) et du rétrécissement (27) de l'ouverture de réception (4) du boîtier (2).

21. Connexion par enfichage selon l'une ou plusieurs des revendications 5 à 8,
**caractérisée en ce que** l'élément de maintien (7) présente dans sa région centrale au moins un prolongement (34) dirigé vers l'extérieur, et **en ce que** l'ouverture de réception (4) du boîtier (2) présente dans la région de l'élargissement (26) de son profil interne au moins une cavité en forme de rainure (35) s'étendant au moins sur une partie de sa circonférence.

22. Connexion par enfichage selon l'une ou plusieurs des revendications 1 à 6,
**caractérisée en ce que** le moyen de verrouillage (36) est constitué dans la région entre la tige de fiche (5) et l'ouverture de réception (4) du boîtier (2), par une chambre (36) pour agent de pression, de manière à ce que, lorsqu'une pression est exercée sur la connexion enfichée et bloquée, un coussin de pression (p) soit constitué dans la chambre pour agent de pression (36), ce coussin exerçant sur la fiche mâle (3) une force (F) de précontrainte, dans le sens contraire à la direction d'enfichage (E).

23. Connexion par enfichage selon la revendication 22,
**caractérisée en ce que** la chambre pour agent de pression (36) est agencée, en tant que chambre annulaire radialement entre une partie (38), dont le diamètre a été réduit au moyen d'un redan (37), de la tige de fiche (5), et une partie (40) dont le diamètre a été élargi au moyen d'un redan (39), de l'ouverture de réception (4), le redan (37) de la tige de fiche (5) étant agencé sur la face de la chambre pour agent de pression opposée à la direction d'enfichage (E) de la fiche mâle (3), et le redan (39) de l'ouverture de réception (4) étant situé sur la face orientée dans la direction d'enfichage (E) de la chambre pour agent de pression (36).

24. Connexion par enfichage selon la revendication 22 ou 23,
**caractérisée en ce que** la chambre pour agent de pression (36) est étanchée, sur sa face opposée à la direction d'enfichage (E) de la prise mâle (3), par un joint circonférentiel (6), et sur sa face orientée dans la direction d'enfichage (E), par un joint annulaire (41) ayant la forme d'une soupape de non-retour de manière à ce qu'en présence d'une pression, une certaine quantité d'agent de pression arrive parle joint annulaire (41) dans la chambre pour agent de pression (36) et y soit retenue en tant que coussin de pression (p), le joint annulaire (41), qui s'appuie en particulier sur le redan (39) de l'ouverture de réception (4), présentant une lèvre d'étanchéité (44) annulaire orientée obliquement à l'inverse de la direction d'enfichage (E) de la prise mâle (3), cette lèvre fonctionnant en tant qu'élément de soupape de non-retour.

25. Connexion par enfichage selon l'une ou plusieurs des revendications 22 à 24,
**caractérisée en ce que** le joint circonférentiel (6) - de préférence en combinaison avec une bague de support (45) - repose dans une rainure annulaire interne (42) de l'ouverture de réception (4) du boîtier (2) et assure l'étanchéité de la tige de fiche (5).

26. Connexion par enfichage selon l'une ou plusieurs des revendications 1 à 10,
**caractérisée en ce que** le moyen de verrouillage (47, 9c, 50) présente au moins un élément de verrouillage (9c) qui, lorsque la fiche (3) est dans la position bloquée, est situé partiellement dans une rainure (47) de la circonférence extérieure de la tige de fiche (5) et partiellement dans un évidemment (49) pratiqué dans la paroi de l'ouverture de réception (4) du boîtier (2), l'évidemment (49) formant un gradin (50) servant d'arrêt à l'élément de verrouillage (9c) dans la direction d'enfichage (E) de la fiche mâle (3).

27. Connexion par enfichage selon la revendication 26,
**caractérisée par** un profil (48) coniquement rétréci dans la direction d'enfichage (E) de la prise mâle (3) et prévu dans l'ouverture de réception (4) du boîtier (2), le diamètre intérieur du profil (48) étant plus grand à son entrée que le diamètre extérieur de l'élément de verrouillage (9c), ce diamètre diminuant de manière à ce que l'élément de verrouillage (9c) soit radialement comprimé lors de l'enfichage de la fiche mâle (3) dans l'ouverture de réception (4), et l'évidemment (49) étant situé dans la région du profil (48) coniquement rétréci,
**caractérisé en outre par** un anneau détachable (51), précontraint par rapport à la circonférence de l'ouverture de réception (4), et présentant une surface oblique (52) dirigée radialement vers l'intérieur et s'arrêtant au niveau du profil coniquement rétréci (48) ainsi qu'un bord (53) dirigé radialement vers l'intérieur, et faisant saillie de la paroi du boîtier (2) dans la région du gradin (50) formé par l'évidemment (49).

28. Connexion par enfichage selon l'une ou plusieurs des revendications 1 à 9,
**caractérisée en ce que** le moyen de verrouillage (55, 9d, 56) est prévu à l'extérieur de l'ouverture de réception (4) du boîtier (2).

29. Connexion par enfichage selon la revendication 28,
**caractérisée en ce que** le moyen de verrouillage (55, 9d, 56) comprend un élément de verrouillage (9d) qui peut être serré entre une surface d'appui (55) de la fiche mâle (3), de préférence d'une collerette (54) prévue sur la fiche (3), et une surface d'appui (56) du boîtier (2) de préférence dans sa partie insérée (11).

30. Connexion par enfichage selon la revendication 29,
**caractérisée en ce que** l'élément de verrouillage (9d) est formé par deux couches en U (57, 58) reliées par une traverse (63), une couche en U (57) venant en appui sur la surface d'arrêt (56) du boîtier (2) lorsque la fiche mâle (3) est en position d'arrêt, et l'autre couche en U (58) s'appuyant sur la surface d'arrêt (55) de la fiche mâle (3), la traverse (63) reliant les bras (59, 60, 61, 62) des couches en U (57, 58).

31. Connexion par enfichage selon la revendication 30,
**caractérisée en ce que** l'élément de verrouillage (9d) présente, à angle droit par rapport aux couches en U (57, 58), sur les faces externes des bras (59, 60, 61, 62), des pattes (65, 66, 67, 68).qui contrecarrent la torsion de l'élément de verrouillage (9d) et présentent de préférence sur leur surface des courbures d'arrêt (69).
